(19) Europäisches Patentamt
European Patent Office
Office européen des brevets

(11) EP 4 386 903 A1

(12) EUROPEAN PATENT APPLICATION
published in accordance with Art. 153(4) EPC

(43) Date of publication:
**19.06.2024 Bulletin 2024/25**

(21) Application number: **22855758.3**

(22) Date of filing: **30.06.2022**

(51) International Patent Classification (IPC):
***H01M 4/38*** *(2006.01)* ***H01M 4/36*** *(2006.01)*
***H01M 4/58*** *(2010.01)*

(52) Cooperative Patent Classification (CPC):
**H01M 4/36; H01M 4/38; H01M 4/58;** Y02E 60/10

(86) International application number:
**PCT/JP2022/026169**

(87) International publication number:
**WO 2023/017694 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.08.2021 PCT/JP2021/029652**

(71) Applicant: **DIC Corporation**
**Tokyo 174-8520 (JP)**

(72) Inventors:
- **TAKEHISA,Toru**
**Sakura-shi, Chiba 285-8668 (JP)**
- **ZHU, Peixin**
**Sakura-shi, Chiba 285-8668 (JP)**
- **KATANO, Satoshi**
**Sakura-shi, Chiba 285-8668 (JP)**
- **SASAKI, Hirotomo**
**Sakura-shi, Chiba 285-8668 (JP)**
- **TAMURA, Tetsuya**
**Sakura-shi, Chiba 285-8668 (JP)**
- **KAWASE, Kenichi**
**Sakura-shi, Chiba 285-8668 (JP)**
- **BABA, Takanori**
**Sakura-shi, Chiba 285-8668 (JP)**
- **ARAI, Tatsuhiko**
**Sakura-shi, Chiba 285-8668 (JP)**

(74) Representative: **TBK**
**Bavariaring 4-6**
**80336 München (DE)**

# (54) SECONDARY BATTERY MATERIAL, NEGATIVE ELECTRODE ACTIVE MATERIAL, AND SECONDARY BATTERY

(57) [Object] To provide a secondary battery material that is used in a lithium ion battery, a negative electrode active material including the secondary battery material, and a secondary battery including the negative electrode active material. The secondary battery material gives a secondary battery having high charge and discharge capacity, initial efficiency, and capacity retention rate as a whole and having an excellent balance of these characteristics.

[Solution] A secondary battery material contains Si (silicon), O (oxygen), and C (carbon), and the content ratio x of O to Si satisfies $0.1 \leq x \leq 2$, and the content ratio y of C to Si satisfies $0.3 \leq y \leq 11$.

【Fig. 1】

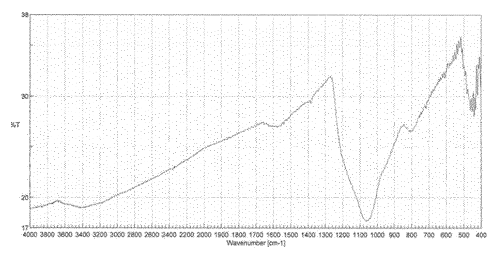

EP 4 386 903 A1

## Description

Technical Field

The present invention relates to a material for secondary batteries, a negative electrode active material including the material for secondary batteries, and a secondary battery including the negative electrode active material.

Background Art

Nonaqueous electrolyte secondary batteries are used in not only portable devices but also hybrid cars, electric cars, home storage batteries, and so on and are required to have multiple characteristics such as electric capacity, safety, and stable operation in a well-balanced manner.

In such secondary batteries, a lithium intercalation compound that releases lithium ions from between layers is mainly used in a negative electrode material. For example, various lithium ion batteries using carbonaceous materials, such as graphite, that can occlude and release lithium ions between layers of crystal planes during charging and discharging as the negative electrode active material are being developed and put into practical use.

Furthermore, in recent years, with the miniaturization of various electronic devices and communication devices and rapid spread of hybrid automobiles and so on, as driving power sources of these devices, a secondary battery with higher capacity and further improved various battery characteristics such as a cycle characteristic and a discharge rate characteristic is strongly demanded to be developed.

As one of attempts of improving the performance of secondary batteries, it has been tried to improve the negative electrode active material such as graphite that has been used hitherto. PTL 1 discloses a secondary battery negative electrode active material including a silicon oxide composite material that shows X-ray small angle scattering and scattering observed in a specific range by Raman spectroscopy and has an intensity ratio of Raman scattering peaks within a specific range. The silicon oxide composite material is represented by a general formula: SiOxCy.

PTL 2 discloses a SiOC composite material in a microparticle form including a silicon element, an oxygen element, and a carbon element, wherein a silicon particle is embedded in a matrix of the SiOC, and the microparticle is formed of an amorphous SiOC matrix and has a core-coating structure having a core coated with at least one amorphous carbon layer.

PTL 3 discloses a SiOC structure including at least one silicon-based microparticle that is coated with a SiOC coating layer containing at least Si, O, and C as constituent elements and having a specific surface area and a particle diameter that satisfy specific conditions.

PTL 4 discloses a method for manufacturing a compound represented by a general formula: SiOxCy using specific raw materials, and PTL 5 discloses a compound that is a silicon-based inorganic compound composed of silicon, oxygen, and carbon, wherein the chemical bond state of the silicon present in the silicon-based inorganic compound is characteristic.

However, since the initial efficiency of the lithium secondary battery using Si, O, and C is low, various improvements for using Si, O, and C in the negative electrode active material have been tried.

For example, PTL 6 describes a negative electrode active material particle including a carbon coat having a specific surface area and compression resistivity in at least a part of the surface of the silicon compound.

The negative electrode active material particle described in PTL 6 contains a silicon compound and is said to have excellent electrical conductivity by coating at least a part of the surface of the silicon compound with a carbon coat. Furthermore, it is inferred that the impregnating ability of the electrolytic solution of the battery is improved by adjusting the specific surface area of the carbon coat in a specific range, the electrical conductivity of the surface of the negative electrode active material particle becomes sufficient by adjusting the compression resistivity of the carbon coat in a specific range, and micro precipitation of Li due to power concentration to the surface is unlikely to occur.

PTL 7 proposes a composite particle including a nanosized silicon particle and a wall of a carbon layer that defines between a space containing the silicon particle and a space not containing the silicon particle for the purpose of preventing the reduction of the cycle characteristic due to large volume expansion of silicon.

PTL 8 describes a negative electrode material for batteries including a silicon material region and a carbon material region of a carbon material formed in the circumference of the silicon material region with a void therebetween in at least a part thereof, wherein the average interplanar spacing d002 of the (002) plane of the carbon material region determined by a powder X-ray diffraction method using Cu-Ka rays is 0.365 nm or more and 0.390 nm or less.

PTLs 7 and 8 describe that disruption of the negative electrode material due to a large volume change of a silicon compound through charging and discharging is suppressed by providing a void between the silicon compound and the carbon coat.

Citation List

Patent Literature

PTL 1: International Publication No. WO 2014/002602
PTL 2: Japanese Unexamined Patent Application Publication (Translation of PCT Application) No. 2018-502029
PTL 3: International Publication No. WO 2020/179409
PTL 4: Japanese Unexamined Patent Application Publication No. 2018-106830
PTL 5: International Publication No. WO 2019/107336
PTL 6: Japanese Unexamined Patent Application Publication No. 2016-164870
PTL 7: International Publication No. WO 2013/031993
PTL 8: Japanese Unexamined Patent Application Publication No. 2019-125435

Summary of Invention

Technical Problem

Since the initial capacity of secondary batteries using graphite-based negative electrode active materials is low, various improvements for the purpose of increasing the capacity have been performed. The silicon-containing active materials described in PTLs 1 to 5 above make it possible to increase the initial capacity.

However, the silicon-containing active materials are demanded to be further improved in capacity retention rate and battery lifetime. In SiOC composites, there is a tendency of decreasing the retention ratio with increasing the content of silicon. Accordingly, it is demanded to further improve the performance of the negative electrode active material that is used in a secondary battery.

In addition, in an existing active material, the surface area increases by being broken, and thereby the contact area between the active material and an electrolytic solution increases. As a result, it is inferred that an increase in the generation amount of the solid phase interface electrolyte decomposition product (hereinafter, also referred to as "SEI") during charging and discharging decreases the reversible charge and discharge capacity per unit volume and decreases the initial Coulombic efficiency.

However, the method of coating a negative electrode active material particle with a carbon coat as in PTL 6 is insufficient for suppressing the large volume change of a silicon compound by charging and discharging, and the initial Coulombic efficiency is not sufficiently improved.

Suppression of breakage of a carbon material due to a large volume change of a silicon compound by charging and discharging has been tried by providing a void between the silicon material and the carbon material as in PTLs 7 and 8. However, the effect of improving the initial Coulombic efficiency only by disposing a void is still insufficient.

The present inventors focused on the ratios of silicon, oxygen, and carbon in SiOC composites and found that the performance of the negative electrode active material of a secondary battery can be further improved by adjusting these composition ratios within a specific range, and the present invention has been accomplished.

That is, the present invention relates to a secondary battery material to be used in a lithium ion battery, a negative electrode active material including the secondary battery material, and a secondary battery including the negative electrode active material, and the object of the present invention is to provide a secondary battery material that provides a secondary battery having high charge and discharge capacity, initial efficiency, and capacity retention rate as a whole and having an excellent balance of these characteristics.

Furthermore, the present invention provides a negative electrode active material that includes the secondary battery material and provides a secondary battery having high charge and discharge capacity, initial efficiency, and capacity retention rate as a whole and having an excellent balance of these characteristics.

Solution to Problem

The present invention includes the following aspects:

[1] A secondary battery material containing Si (silicon), O (oxygen), and C (carbon), wherein the content ratio x of O to Si satisfies $0.1 \leq x \leq 2$, and the content ratio y of C to Si satisfies $0.3 \leq y \leq 11$;
[2] The secondary battery material according to the above [1], wherein $0.1 \leq x \leq 1.5$ and $0.3 \leq y \leq 11$ are satisfied;
[3] The secondary battery material according to the above [1], wherein $0.1 \leq x \leq 1$ and $0.3 \leq y \leq 11$ are satisfied;
[4] The secondary battery material according to the above [1], wherein $0.1 \leq x \leq 0.7$ and $0.3 \leq y \leq 11$ are satisfied;

[5] The secondary battery material according to any one of the above [1] to [4], wherein x + y is 1.2 or more;
[6] The secondary battery material according to any one of the above [1] to [4], wherein x + y is 2.3 or more;
[7] The secondary battery material according to any one of the above [1] to [6], wherein as a chemical shift value obtained from a $^{29}$Si-NMR spectrum, an integrated intensity A of a peak in a range of from -70 ppm to -90 ppm pertaining to Si (0 value) and an integrated intensity B of a peak in a range of from -90 ppm to -130 ppm pertaining to bond in $SiO_4$ satisfy the following expression:

$$\text{Expression: } 0.2 < A/B < 5;$$

[8] The secondary battery material according to any one of the above [1] to [7], having a volume average particle diameter (D50) of from 0.5 um to 10 um;
[9] The secondary battery material according to any one of the above [1] to [8], wherein a specific surface area (BET) is from 1 $m^2/g$ to 20 $m^2/g$; and
[10] The secondary battery material according to any one of the above [1] to [9], wherein in infrared analysis, no absorption spectrum derived from Si-H stretching vibration is present in from 2000 $cm^{-1}$ to 2200 $cm^{-1}$.

The present invention also includes the following aspects:

[11] A negative electrode active material comprising the secondary battery material according to any one of the above [1] to [10], wherein a carbon coat is provided on at least a part of the surface, a true density is 1.6 $g/cm^3$ or more and 2.0 $g/cm^3$ or less, and a porosity defined by a following expression (1) is 7% or more and 20% or less:
Expression 1

$$V = \left(\frac{100}{\rho'} - \frac{A}{\rho''} - \frac{100-A}{\rho}\right) \div \frac{100}{\rho'} \qquad (1)$$

(in the expression (1), V represents porosity (%), $\rho$ represents density ($g/cm^3$) of inside of the negative electrode active material, $\rho'$ represents density ($g/cm^3$) of the entire negative electrode active material, $\rho''$ represents density ($g/cm^3$) of the carbon coat, and A represents an amount (mass%) of the carbon coat);
[12] The negative electrode active material according to the above [11], wherein a matrix including a carbonaceous phase is present inside the material;
[13] The negative electrode active material according to the above [11] or [12], comprising a Si nanoparticle;
[14] The negative electrode active material according to any one of the above [11] to [13], wherein the amount of the carbon coat is 6 mass% or more and 30 mass% or less;
[15] The negative electrode active material according to the above [12], wherein the matrix contains silicon oxycarbide and a fired product of a phenolic resin; and
[16] The negative electrode active material according to the above [13], wherein the Si nanoparticle has a volume average particle diameter (D50) of 100 nm or less.

The present invention also includes the following aspects:

[17] A negative electrode active material comprising a Si nanoparticle, a carbonaceous phase, and the secondary battery material according to any one of the above [1] to [10], wherein

the carbonaceous phase embeds the Si nanoparticle,
the carbonaceous phase has a carbon 002 plane spacing of from 0.34 nm to 0.38 nm determined by XRD measurement, and
a specific surface area is from 0.01 $m^2/g$ to 20 $m^2/g$;

[18] The negative electrode active material according to the above [17], having a true density of 1.8 to 2.5 $g/cm^3$;
[19] The negative electrode active material according to the above [17] or [18], wherein a mass reduction rate in from 100°C to 700°C is 10% to 70% by TG analysis in a dry air flow;
[20] The negative electrode active material according to any one of the above [17] to [19], comprising N (nitrogen), wherein the content of N is 0.2 mass% or more and 2.5 mass% or less when the total mass of Si, O, C, and N is

defined as 100 mass%;

[21] The negative electrode active material according to any one of the above [17] to [20], wherein a proportion of the secondary battery material is from 0.1 wt% to 19 wt%;

[22] The negative electrode active material according to any one of the above [17] to [21], wherein as a chemical shift value obtained from a $^{29}$Si-NMR spectrum, integrated intensity A of a peak in a range of from -70 ppm to -90 ppm pertaining to Si (0 value) and integrated intensity B of a peak in a range of from -90 ppm to -130 ppm pertaining to bond in $SiO_4$ satisfy a following expression (2):

$$0.2 < A/B < 5 \quad (2);$$

[23] The negative electrode active material according to any one of the above [17] to [22], having an average particle diameter (D50) of from 0.5 um to 10 um;

[24] The negative electrode active material according to any one of the above [17] to [23], having a specific surface area (BET) of from 1 $m^2/g$ to 20 $m^2/g$; and

[25] The negative electrode active material according to any one of the above [17] to [24], wherein in infrared analysis, no absorption spectrum derived from Si-H stretching vibration is present in from 2000 $cm^{-1}$ to 2200 $cm^{-1}$.

The present invention further includes the following aspect:
A secondary battery comprising the negative electrode active material according to any one of the above [11] to [25].

Advantageous Effects of Invention

According to the present invention, provided are a negative electrode active material that gives a secondary battery having high charge and discharge capacity, initial efficiency, and capacity retention rate as a whole and having an excellent balance of these characteristics and a secondary battery material that is used in the negative electrode active material.

Brief Description of Drawings

[Fig. 1] Fig. 1 is a spectrograph obtained by FT-IR measurement of the secondary battery material obtained in Example 1.

[Fig. 2] Fig. 2 is a spectrograph obtained by FT-IR measurement of the secondary battery material obtained in Example 16.

[Fig. 3] Fig. 3 is a spectrograph obtained by FT-IR measurement of the secondary battery material obtained in Example 26.

Description of Embodiments

The secondary battery material of the present invention (hereinafter, also referred to as "the present secondary battery material") contains Si (silicon), O (oxygen), and C (carbon), and the content ratio x of O to Si satisfies $0.1 \leq x \leq 2$, and content ratio y of C to Si satisfies $0.3 \leq y \leq 11$. The content ratio is a molar ratio of O or C to Si contained in the present secondary battery material, and x is the number of moles of O contained in the present secondary battery material with respect to one mole of Si contained in the present secondary battery material. Similarly, y is the number of moles of C contained in the present secondary battery material with respect to one mole of Si contained in the present secondary battery material. These molar ratios can be determined by measuring the contents of the respective elements and then converting the contents to molar ratios (atomic ratio). On this occasion, the contents of O and C can be quantitatively determined using an inorganic elemental analyzer, and the content of Si can be quantitatively determined using an ICP optical emission spectroscope (ICP-OES).

The molar ratio is preferably measured by the method above, but the content ratio of the entire secondary battery material can also be deduced by acquiring the content ratio data at a large number of measurement points through local analysis of the secondary battery material. Examples of the local analysis include energy dispersive X-ray spectroscopy (SEM-EDX) and an electronic probe microanalyzer (EPMA).

The present secondary battery material is preferably a matrix including Si, O, and C and more preferably further includes a silicon particle (hereinafter, also referred to as "Si particle"). The matrix is a three-dimensional network structure of a silicon oxycarbide (hereinafter, also referred to as "SiOC") skeleton, and when the present secondary battery material

is used as a negative electrode active material, the negative electrode active material preferably includes the present secondary battery material and a carbonaceous phase. The carbonaceous phase referred herein is C that is not included in the three-dimensional skeleton of SiOC, and includes C present as free carbon, C forming a carbon-carbon bond in the carbonaceous phase, and C bonding between the SiOC skeleton and the carbonaceous phase.

When the present secondary battery material is used as a negative electrode active material, the negative electrode active material preferably includes the matrix and the Si particle, and it is preferable to use the present secondary battery material including the matrix and the Si particle. The Si particle is preferably present in a state of being dispersed in the matrix, the negative electrode active material more preferably includes the matrix, the carbonaceous phase, and the Si particle, and it is more preferable to use the present secondary battery material including the matrix, the carbonaceous phase, and the Si particle.

The matrix preferably contains silicon oxycarbide and a fired product of a carbon source resin as described below, and preferably contains silicon oxycarbide and a fired product of a phenolic resin.

When the present secondary battery material is the matrix, the SiOC skeleton in the matrix constituting the present secondary battery material has a characteristic of high chemical stability and becomes a composite construction with the carbonaceous phase, and as the electron transition resistance decreases, the diffusion of lithium ions also becomes easier. The Si particle and the electrolytic solution are prevented from directly contacting with each other by tightly wrapping the Si particle with the composite structure of the SiOC skeleton and the carbonaceous phase. Accordingly, in the negative electrode active material including the present secondary battery material, the carbonaceous phase, and the Si particle, while the contained Si particle plays the role as a main component in charge and discharge performance expression, chemical reaction between Si and the electrolytic solution is avoided during charging and discharging. Consequently, performance deterioration of the Si particle can also be prevented to the maximum extent.

In more detail, the electron distribution in the inside of SiOC varies by approach of lithium ions, and an electrostatic bond, a coordinate bond, or the like is formed between the SiOC and the lithium ions. Accordingly, the lithium ions are stored in the SiOC skeleton. In addition, since these coordinate bond energies are relatively low, the elimination reaction of the lithium ions is easily performed. That is, it is inferred that SiOC can reversibly cause insertion and elimination reactions of lithium ions during charging and discharging.

The Si particle in the matrix is Si of 0 value, and from the viewpoint of the charge and discharge performance and the initial Coulombic efficiency when used as a negative electrode active material, the Si particle is preferably a nanoparticle, and the present secondary battery material is preferably a composite including the Si nanoparticle. The nanoparticle is a particle having a nano-order particle diameter as the volume average particle diameter, and the particle diameter thereof is preferably from 10 nm to 300 nm, more preferably from 20 nm to 250 nm, and further preferably from 30 nm to 200 nm. In addition, from the viewpoint of the charge and discharge performance and the capacity retention when used as a negative electrode active material, the volume average particle diameter of the Si nanoparticle is preferably 100 nm or less and more preferably 70 nm or less.

Here, the volume average particle diameter is the value of D50 that can be measured using a laser diffraction particle size analyzer or the like. The D50 can be measured by dynamic light scattering using a laser particle size analyzer or the like. The D50 is the particle diameter at which the cumulative volume is 50% when a volume cumulative distribution curve is drawn from the small diameter side in a particle size distribution of the Si particle.

A Si particle having a large size exceeding 300 nm forms large lumps, and when used as a negative electrode active material, a pulverization phenomenon easily occurs during charging and discharging, and it is assumed that the capacity retention rate of the negative electrode active material tends to decrease. In contrast, since a Si particle having a small size of less than 10 nm is too fine, the Si particle easily aggregates. Accordingly, there is a risk of reducing the dispersibility of the Si particle into the negative electrode active material. In addition, when the Si particle is too fine, the surface activity energy increases, and a by-product and so on tend to increase on the surface of the Si particle by high-temperature firing of the negative electrode active material. The above may lead to a reduction of the charge and discharge performance.

The Si nanoparticle is obtained by, for example, pulverizing Si lumps to a nano size. The charge and discharge capacity and the initial Coulombic efficiency when used in a secondary battery can be improved by the presence of this Si nanoparticle.

Examples of the pulverizer for pulverizing Si lumps to nanoparticles include pulverizers such as a ball mill, a bead mill, and a jet mill. The pulverization may be wet pulverization using an organic solvent, and as the organic solvent, for example, alcohols and ketones can be suitably used, but aromatic hydrocarbon solvents such as toluene, xylene, naphthalene, and methylnaphthalene can also be used.

The shape of the Si particle is not particularly limited, but from the viewpoint of the charge and discharge performance when used as a negative electrode active material, the length in the long axis is preferably from 70 to 300 nm, and the thickness is preferably from 15 to 70 nm. From the viewpoint of the charge and discharge performance when used as a negative electrode active material, the ratio of the thickness to the length, i.e., a so-called aspect ratio, is preferably 0.5 or less.

As the form of the Si particle, the average particle diameter can be measured by dynamic light scattering, but a sample with an aspect ratio above can be identified more easily and precisely by using an analysis means such as a transmission electron microscope (TEM) or a field emission scanning electron microscope (FE-SEM). When the negative electrode active material contains the present secondary battery material, the sample is cut with a focused ion beam (FIB), and the cross section can be observed with an FE-SEM. Alternatively, the sample is sliced, and the state of the Si particle can be identified by TEM observation.

The aspect ratio of the Si particle is the calculation result based on 50 particles in the main part of the sample within the field of view in a TEM image.

The content ratio x of O to Si included in the present secondary battery material is preferably $0.1 \leq x \leq 1.5$, more preferably $0.1 \leq x \leq 1.0$, and further preferably $0.1 \leq x \leq 0.7$ from the viewpoint of the primacy of the balance between the charge and discharge performance and the capacity retention rate when used as a secondary battery.

The content ratio y of C to Si included in the present secondary battery material is preferably $0.3 \leq y \leq 8$ from the viewpoint of the balance between the charge and discharge performance and the initial Coulombic efficiency when used as a secondary battery.

From the viewpoint of the balance between charge and discharge capacity, initial Coulombic efficiency, and capacity retention rate, the sum of the content ratio x and the content ratio y, x + y, is preferably 1.2 or more and more preferably 2.3 or more.

The present secondary battery material may include a nitrogen atom, N, in addition to Si, O, and C. N can be introduced into the present secondary battery material in a method for manufacturing the present secondary battery material described below as an atomic group containing N as a functional group in its molecule become from the raw material to be used, for example, a phenolic resin, a dispersant, a polysiloxane compound, or another nitrogen compound and nitrogen gas to be used in a firing process. The present secondary battery material includes N and thereby tends to be excellent in the charge and discharge performance and the capacity retention rate when used as a negative electrode material.

When the present secondary battery material includes N, the content of N is preferably 0.1 mass% or more, more preferably 0.5 mass% or more, and further preferably 1 mass% or more when the total mass of Si, O, C, and N is defined as 100 mass% from the viewpoint of the charge and discharge performance and the capacity retention rate.

From the viewpoint of the charge and discharge performance and the capacity retention rate, the content of N is preferably 5 mass% or less, more preferably 3 mass% or less, and further preferably 2 mass% or less.

In the chemical shift value obtained from a $^{29}$Si-NMR spectrum, the present secondary battery material preferably satisfies the following expression:

$$0.2 < A/B < 5,$$

in the above expression, A represents the integrated intensity of a peak in a range of from -70 ppm to -90 ppm pertaining to Si (0 value), and B represents the integrated intensity of a peak in a range of from -90 ppm to -130 ppm pertaining to the bond in $SiO_4$.

The present secondary battery material becomes a matrix having a three-dimensional network structure of the SiOC skeleton of each element of Si, O, and C and includes a carbonaceous phase, and preferably has a structure in which the Si particle is uniformly dispersed therein. In the three-dimensional network structure of the SiOC skeleton, the bonds can be mainly divided into three types based on the type of O or C atom bonded to Si and the numbers of bonds with the respective atoms. The domains having three types of bonds are $SiO_2C_2$, $SiO_3C$, and $SiO_4$, and these domains are further randomly bonded and become silicon oxycarbide (SiOC). The chemical shift (solid state NMR) of the $SiO_3C$ domain within a range of from -60 ppm to -80 ppm when the center position is defined as -70 ppm.

In the present secondary battery material, when a chemical shift value obtained from a $^{29}$Si-NMR spectrum satisfies the above range of A/B, the ratio of the Si particle with 0 value in the secondary battery material and the $SiO_4$ present in the silicon oxycarbide is a ratio at which the Si particle easily expresses the performance, and the charge and discharge performance, in particular, the cycle characteristic, when used in a secondary battery, is excellent. The A/B is more preferably in a range of $0.8 \leq A/B \leq 2.9$ and further preferably in a range of $0.9 \leq A/B \leq 2.8$.

The $^{29}$Si-NMR spectrum is easily obtained using a solid state NMR apparatus. In the present specification, the solid state NMR measurement is performed using, for example, an apparatus (JNM-ECA600) manufactured by JEOL Ltd. The A/B is obtained by tuning with a solid state NMR analyzer for 10 minutes, performing single-pulse measurement using a 8 mm probe, Fourier-transforming the obtained solid state NMR spectral data (integration: 64 times), subjecting the result to waveform separation using Gauss and Lorentz functions, and then determining the ratio of the integrated intensity A of a peak in the range of from -70 ppm to -90 ppm to the integrated intensity B of a peak in the range of from -90 ppm to -130 ppm based on the peak areas obtained by the waveform separation.

The average particle diameter (D50) of the present secondary battery material is preferably from 0.5 um to 10

um and more preferably from 2 um to 8 um. When the D50 is too small, as the specific surface area increases significantly, the amount of SEI generated during charging and discharging increases when used in a secondary battery, and thereby the reversible charge and discharge capacity per unit volume may decrease. When the D50 is too large, the present secondary battery material may peel off from the current collector during electrode film production. The method for measuring the D50 is the same as above.

The particle diameter range of the present secondary battery material before classification is preferably from 0.1 um to 30 um, and the particle diameter range after elimination of fine powder particles is preferably from 0.5 um to 30 $\mu$m.

The specific surface area (BET) of the present secondary battery material is preferably in a range of from 1 $m^2$/g to 20 $m^2$/g and more preferably in a range of from 3 $m^2$/g to 18 $m^2$/g. When the specific surface area (BET) is within the above range, the absorption amount of the solvent during electrode production can be appropriately maintained, and the amount of the binding agent used for maintaining the binding property can also be appropriately maintained. The specific surface area (BET) can be determined by nitrogen gas adsorption measurement, and can be measured using a specific surface area measurement apparatus.

In infrared analysis of the present secondary battery material, it is preferable that there is no absorption spectrum derived from Si-H stretching vibration in from 2000 $cm^{-1}$ to 2200 $cm^{-1}$. If there is no absorption spectrum derived from Si-H stretching vibration in from 2000 $cm^{-1}$ to 2200 $cm^{-1}$, lithium ions can be efficiently occluded, leading to an improvement in charge and discharge capacity.

The absence of an absorption spectrum derived from Si-H stretching vibration means that the absorption intensity of the absorption spectrum derived from Si-H stretching vibration in from 2000 $cm^{-1}$ to 2200 $cm^{-1}$ to the absorption intensity of the absorption spectrum in a range from 900 $cm^{-1}$ to 1200 $cm^{-1}$ is 0.1% or less and more preferably 0.05% or less.

When the negative electrode active material includes the present secondary battery material, the matrix preferably has a SiOC skeleton structure and also has a carbonaceous phase composed only of C element. When the negative electrode active material includes the present secondary battery material and a carbonaceous phase, in the Raman spectrum of the carbonaceous phase, the carbon structure has a scattering peak at around 1590 $cm^{-1}$ pertaining to the G band of a graphite long-period carbon lattice structure and a scattering peak at around 1330 $cm^{-1}$ pertaining to the D band of a graphite short-period carbon lattice structure with disorder and a defect, and the intensity ratio I (G band/D band) of these scattering peaks is preferably in a range of from 0.7 to 2. The scattering peak intensity ratio I is more preferably from 0.7 to 1.8. When the scattering peak intensity ratio I is within the above range, the carbonaceous phase in the matrix can be as follows.

A part of C atoms of the carbonaceous phase are bonded to a part of Si atoms in the SiOC skeleton. This carbonaceous phase is an important component that affects the charge and discharge characteristics. The carbonaceous phase is mainly formed in a SiOC skeleton constituted of $SiO_2C_2$, $SiO_3C$, and $SiO_4$. Since the carbonaceous phase is bonded to a part of Si atoms of the SiOC skeleton, electron transfer between Si atoms in the inside and the surface of the SiOC skeleton and free carbon becomes easier. Consequently, it can be inferred that the insertion and elimination reactions of lithium ions proceed rapidly during charging and discharging when used in a secondary battery and the charge and discharge characteristics are improved. The negative electrode active material may expand and contract by the insertion and elimination reactions of lithium ions, but it is inferred that the expansion and contraction of the entire active material are relieved by the presence of the carbonaceous phase near the active material to show an effect of largely improving the capacity retention rate.

It is preferable to form the carbonaceous phase as a result of thermal decomposition of a Si-containing compound and a carbon source resin as precursors in an inert gas atmosphere when the present secondary battery material is produced. Specifically, the carbonizable portions in the molecular structures of the Si-containing compound and the carbon source resin become carbon components through high-temperature thermal decomposition in an inert atmosphere, and a part of the carbon of these carbon components is bonded to a part of the SiOC skeleton. The carbonizable component is preferably a hydrocarbon, more preferably alkyl, alkylene, alkene, alkyne, or aromatic, and further preferably aromatic.

An effect of decreasing the resistance of the active material is expected by the presence of free carbon as the carbonaceous phase, and it is inferred that when used in a secondary battery negative electrode, the reaction in the inside of the negative electrode active material occurs uniformly and smoothly to give a secondary battery material with an excellent balance between the charge and discharge performance and the capacity retention rate. The free carbon can be introduced from the Si-containing compound only, but it is expected to increase the free carbon abundance and its effect by using a carbon source resin in combination. The type of the carbon source resin is preferably, for example, a carbon compound having a six-membered ring of carbon.

The presence state of the carbonaceous phase can be identified not only by a Raman spectrum but also with a thermogravimetric differential thermal analyzer (TG-DTA). The carbonaceous phase is easily thermally decomposed in the atmosphere unlike C atoms in the SiOC skeleton, and the carbon abundance can be determined by the thermogravimetric loss measured in the presence of air. That is, the carbon amount can be quantitatively determined using a TG-DTA. Based on the thermogravimetric loss behavior through the measurement, changes in the thermal decomposition temperature behavior, such as the decomposition reaction start temperature, the decomposition reaction end temperature, the number of thermal decomposition reaction types, and the temperature of the maximum gravimetric loss in each thermal decomposition reaction type, can also be easily understood. The state of carbon can be judged using the values of these behavior temperatures. In contrast, since the C atoms in the SiOC skeleton, i.e., the carbon atoms that are bonded to Si atoms constituting the $SiO_2C_2$, $SiO_3C$, and $SiO_4$ have a very strong chemical bond, it is inferred that the thermal stability is high, and thermal decomposition in the atmosphere does not occur within the measurement temperature range of the thermal analyzer. Carbon in the carbonaceous phase has characteristics similar to those of amorphous carbon and is therefore thermally decomposed in a temperature range of from about 550°C to 900°C in the atmosphere. As a result, a sharp reduction in weight occurs. The maximum temperature of the measurement conditions of a TG-DTA is not particularly limited, but in order to completely terminate the thermal decomposition reaction of carbon, it is preferable to perform TG-DTA measurement under conditions from about 25°C to about 1000°C or more in the atmosphere.

The true density of the present secondary battery material is preferably greater than 1.6 g/cm$^3$ and less than 2.4 g/cm$^3$ and more preferably greater than 1.7 g/cm$^3$ and less than 2.35 g/cm$^3$. When the true density is within the above range, the composition ratio and porosity of each of the components constituting the secondary battery material are in appropriate ranges, and the charge and discharge performance is easily expressed when used as a negative electrode active material. The true density can be measured using a true density measurement apparatus.

The negative electrode active material preferably includes the present secondary battery material. The negative electrode active material may be the secondary battery material itself or may include another component as needed.

The negative electrode active material may include the present secondary battery material having a surface coated with a material (hereinafter, also referred to as "coating material") that is different from the present secondary battery material. The coating material is preferably a material that can be expected to have electron conductivity, lithium ion conductivity, and an effect of suppressing the decomposition of an electrolytic solution.

When the surface of the present secondary battery material is coated with the coating material, the coating layer preferably has an average thickness of 10 nm or more and 300 nm or less. The average thickness is more preferably 20 nm or more and 200 nm or less. When the present secondary battery material includes the Si nanoparticle, the Si nanoparticle exposing on the surface of the present secondary battery material can be protected by the coating layer having the above average thickness of the present secondary battery material. Consequently, when the present secondary battery material is used as a negative electrode active material, the chemical stability and the thermal stability of the negative electrode active material are improved. As a result, the reduction in the charge and discharge performance of the obtained secondary battery can be further suppressed.

When the surface of the present secondary battery material is coated with the coating material, from the viewpoint of improving the chemical stability and the thermal stability of the negative electrode active material, the content of the coating material is preferably from 1 to 30 mass% and more preferably from 3 to 25 mass% based on the total amount of the secondary battery material assuming as 100 mass%. The total amount of the present secondary battery material is the sum of the amounts of Si, O, and C constituting the present secondary battery material and the coating material. When the present secondary battery material includes N, the total amount also includes the amount of N.

Examples of the coating material include electron conductive materials such as carbon, titanium, and nickel. Among these materials, from the viewpoint of the chemical stability and the thermal stability of the negative electrode active material, carbon is preferable, and low crystalline carbon is more preferable.

When the coating material is low crystalline carbon, the coating layer has preferably an average thickness of 10 nm or more and 300 nm or less, and the content of the low crystalline carbon is preferably from 1 to 30 mass% based on the total amount of the secondary battery material assuming as 100 mass%.

When the coating material is low crystalline carbon, the coating layer is preferably produced by chemical vapor deposition (CVD).

When the present secondary battery material is coated with a low crystalline carbon, the Raman spectrum of the present secondary battery material preferably has a scattering peak intensity ratio I (G band/D band) in a range of from 0.9 to 1.1. The specific surface area (BET) is preferably 3.5 m$^2$/g or less, and the true density is preferably 1.9 g/cm$^3$ or more.

Since the negative electrode active material includes the present secondary battery material, in the chemical shift value obtained from a $^{29}$Si-NMR spectrum, the negative electrode active material including the present secondary battery material preferably satisfies the following expression:

$$0.2 < A/B < 5,$$

in the expression, A are B are the same as described above.

In the negative electrode active material, when the chemical shift value obtained from the $^{29}$Si-NMR spectrum satisfies the above expression, the ratio of the Si particle with 0 value in the negative electrode active material and the $SiO_4$ present in the silicon oxycarbide is a ratio at which the Si particle easily expresses the performance, and the charge and discharge performance when used in a secondary battery, the capacity retention rate is particularly excellent. The A/B is more preferably in a range of $0.8 \leq A/B \leq 2.9$ and further preferably in a range of $0.9 \leq A/B \leq 2.8$.

The D50 of the negative electrode active material including the present secondary battery material is preferably from 0.5 um to 10 um and more preferably from 2 um or 8 um. When the D50 is too small, as the specific surface area increases significantly, when used in a secondary battery, the amount of SEI generated during charging and discharging increases, and thereby the reversible charge and discharge capacity per unit volume may decrease. When the D50 is too large, the present secondary battery material may peel off from the current collector during electrode film production. The measurement method of D50 is the same as above.

The negative electrode active material including the present secondary battery material preferably has a specific surface area (BET) in a range of from 1 $m^2/g$ to 20 $m^2/g$ and more preferably in a range of from 3 $m^2/g$ to 18 $m^2/g$. When the specific surface area (BET) is within the above range, the absorption amount of the solvent during electrode production can be appropriately maintained, and the amount of the binding agent used for maintaining the binding property can also be appropriately maintained. The method for measuring the specific surface area (BET) is the same as above.

In the infrared analysis of the negative electrode active material including the present secondary battery material, it is preferable that there is no absorption spectrum derived from Si-H stretching vibration in from 2000 $cm^{-1}$ to 2200 $cm^{-1}$. The absence of an absorption spectrum derived from Si-H stretching vibration in from 2000 $cm^{-1}$ to 2200 $cm^{-1}$ leads to a reduction of the irreversible capacity generation sites and leads to the improvement of the initial Coulombic efficiency.

The absence of an absorption spectrum derived from Si-H stretching vibration is the same as above.

In the present invention, examples of a preferable form of the negative electrode active material include a negative electrode active material (hereinafter, also referred to as "the present negative electrode active material 1") including the present secondary battery material, having a carbon coat on at least a part of the surface, and having a true density of 1.6 $g/cm^3$ or more and 2.0 $g/cm^3$ or less and a porosity defined by the following expression (1) of 7% or more and 20% or less.

Expression 2

$$V = \left(\frac{100}{\rho'} - \frac{A}{\rho''} - \frac{100-A}{\rho}\right) \div \frac{100}{\rho'} \qquad (1)$$

In the expression (1), V represents the porosity (%), $\rho$ represents the density ($g/cm^3$) of the inside of the negative electrode active material, $\rho'$ represents the density ($g/cm^3$) of the entire negative electrode active material, $\rho''$ represents the density ($g/cm^3$) of the carbon coat, and A represents the amount (mass%) of the carbon coat.

As described above, it is inferred that although a silicon compound has high capacity, a large volume change occurs by occlusion and release of a large amount of lithium, and as a result, the cyclability is poor. this volume change cannot be sufficiently suppressed only by the carbon coat. Accordingly, proposed is a method by providing a void between the carbon coat and the silicon compound and suppressing the disruption of the carbon coat through buffering of the volume expansion with the void. However, it is inferred that when the void is inadequate, the above buffering effect does not sufficiently function, and the surface area increases due to cracking of the active material, and thereby the amount of the generated SEI increases, and the initial Coulombic efficiency decreases.

In addition, it is inferred that it is necessary to appropriately control not only the porosity and also the composition of the negative electrode active material.

If there is a sufficient void between the silicon compound and the carbon coat, the buffering effect should sufficiently function, but it is inferred that the existing definition of porosity does not necessarily appropriately reflect the situation of the void between the silicon compound and the carbon coat.

The present inventors investigated a relationship between the porosity reflecting the situation of the void of the present secondary battery material and the composition of the negative electrode active material by using the present secondary battery material as a silicon compound, and found that the porosity defined by the above expression (1) appropriately reflects the situation of the void between the present secondary battery material and the carbon coat. The present inventors further found that generation of SEI is suppressed by using a negative electrode active material that has a porosity and a true density defined by the above expression (1) within specific ranges in a secondary battery, and the obtained secondary battery has improved initial Coulombic efficiency.

The present negative electrode active material 1 preferably includes the present secondary battery material as the main component from the viewpoint of the electric capacity. The main component means that the content of the present secondary battery material is at least 50 mass% when the mass of the present negative electrode active material 1 is defined as 100 mass%.

The present negative electrode active material 1 more preferably includes a preferable form of the present secondary battery material.

An example of the preferable form of the present secondary battery material including the present negative electrode active material 1 is a composite of SiOC including a silicon element, an oxygen element, and a carbon element and a carbonaceous phase.

The SiOC is as described above, and the composite of the SiOC and the carbonaceous phase is preferably a structure including a three-dimensional network structure of silicon-oxygen-carbon skeleton and free carbon as the carbonaceous phase. Here, the free carbon is as described above.

When the present secondary battery material is used in the present negative electrode active material 1, the molar ratio, x, of O to Si in SiOC is preferably $1 \leq x < 2$, more preferably $1 \leq x \leq 1.9$, and further preferably $1 \leq x \leq 1.8$ from the viewpoint of the primacy of the balance between the charge and discharge performance and the capacity retention rate.

When the present secondary battery material is used in the present negative electrode active material 1, the molar ratio, y, of C to Si in SiOC is preferably $1 \leq y \leq 20$ and more preferably $1.2 \leq y \leq 15$ from the viewpoint of the balance between the charge and discharge performance and the initial Coulombic efficiency.

The x and y can be quantitatively determined by the above-described method, and the content ratio of the entire negative electrode active material 1 may also be deduced through local analysis, as described above. The local analysis is the same as above.

When the present negative electrode active material 1 including the present secondary battery material, which is a composite of a three-dimensional network structure of the silicon-oxygen-carbon skeleton as SiOC and the free carbon, is used as a preferable form, while the present negative electrode active material 1 in the negative electrode plays the role as a main component in developing charge and discharge performance as the same reason as above, silicon oxycarbide suppresses the SEI generation due to the change in the surface area of the present negative electrode active material 1 during charging and discharging, and the initial Coulombic efficiency of the lithium secondary battery is improved.

As described above, when the present negative electrode active material 1 including the present secondary battery material, which is a composite of a three-dimensional network structure of the silicon-oxygen-carbon skeleton as SiOC and the free carbon, is used as a preferable form, in the silicon-oxygen-carbon skeleton when the SiOC is a composite including a three-dimensional network structure of the silicon-oxygen-carbon skeleton and free carbon, the electron distribution in the inside of the silicon-oxygen-carbon skeleton varies by the approach of lithium ions, and an electrostatic bond, a coordinate bond, and so on are formed between the silicon-oxygen-carbon skeleton and the lithium ions. Lithium ions are stored in the silicon-oxygen-carbon skeleton by these electrostatic bond and coordinate bond. In contrast, since the coordinate bond energy is relatively low, the elimination reaction of lithium ions is easily performed. That is, it is inferred that the silicon-oxygen-carbon skeleton can reversibly cause insertion and elimination reactions of lithium ions during charging and discharging.

As described above, in the present secondary battery material included in the present negative electrode active material 1, the SiOC may include a nitrogen atom, N, in addition to silicon, oxygen, and carbon. The method for introducing N is the same as above. When SiOC includes N, the charge and discharge performance and the capacity retention rate when the present negative electrode active material 1 is used as the negative electrode active material tends to be excellent.

When SiOC includes N, from the viewpoint of the charge and discharge performance and the capacity retention rate when the present negative electrode active material 1 is used in a secondary battery, the molar ratio, a, of O to Si, the molar ratio, b, of C to Si, and the molar ratio, c, of N to Si are preferably $1 \leq a \leq 2$, $1 \leq b \leq 20$, and $0 < c \leq 0.5$ and more preferably $1 \leq a \leq 1.9$, $1.2 \leq b \leq 15$, and $0 < c \leq 0.4$.

The ratios a, b, c can be determined, as in the ratios x and y, by measuring the contents of the elements and then converting them into molar ratios (atomic ratios).

As in the ratios x and y, it is preferable to measure the ratios a, b, and c by the methods described above, but the content ratio of the whole of the present negative electrode active material 1 can also be deduced by acquiring the content ratio data at a large number of measurement points through local analysis of the present negative electrode active material 1. Examples of the local analysis include energy dispersive X-ray spectroscopy (SEM-EDX) and an electronic probe microanalyzer (EPMA).

The present negative electrode active material 1 preferably includes a matrix in the inside thereof. The matrix preferably includes the present secondary battery material and more preferably includes the present secondary battery material and a carbonaceous phase. Further preferably, the carbonaceous phase includes the free carbon.

The matrix preferably contains silicon oxycarbide and a fired product of a phenolic resin as described later.

The present negative electrode active material 1 includes a carbon coat on at least a part of the surface thereof. The carbon coat is preferably a coat consisting of low crystalline carbon among the above-mentioned coating materials.

The amount of the carbon coat is preferably 0.1 mass% or more and 30 mass% or less, more preferably 1 mass% or more and 25 mass% or less, and further preferably 5 mass% or more and 20 mass% or less when the mass of the present negative electrode active material 1 is defined as 100 mass% from the viewpoint of improving the chemical stability and the thermal stability of the present negative electrode active material 1. The average thickness of the carbon coat is preferably 10 nm or more and 300 nm or less from the viewpoint of improving the chemical stability and the thermal stability of the active material.

The present negative electrode active material 1 includes the carbon coat on a part of the surface, preferably 1% or more and more preferably 10% or more of the surface of the present negative electrode active material 1 from the viewpoint of improving the chemical stability and the thermal stability of the present negative electrode active material 1. The present negative electrode active material 1 may include the carbon coat on the surface continuously or intermittently.

The carbon coat is preferably produced by chemical vapor deposition on the surface of the present negative electrode active material 1.

The present negative electrode active material 1 has a true density of 1.6 g/cm$^3$ or more and 2.0 g/cm$^3$ or less. The true density is preferably 1.75 g/cm$^3$ or more and more preferably 1.80 g/cm$^3$ or more from the viewpoint of improving the energy density of the obtained secondary battery.

The true density of the present negative electrode active material 1 is preferably 1.95 g/cm$^3$ or less and more preferably 1.90 g/cm$^3$ or less from the relationship with the porosity.

The true density is a value measured using a true density measurement apparatus.

The present negative electrode active material 1 has a porosity V of 7% or more and 20% or less defined by the following expression (1):

Expression 3

$$V = \left(\frac{100}{\rho'} - \frac{A}{\rho''} - \frac{100-A}{\rho}\right) \div \frac{100}{\rho'} \qquad (1)$$

In the expression (1), ρ is the density (g/cm$^3$) of the inside of the negative electrode active material, ρ' is the density (g/cm$^3$) of the entire negative electrode active material, and ρ" is the density (g/cm$^3$) of the carbon coat.

The density of the entire negative electrode active material is the true density of the negative electrode active material including the carbon coat, and the density of the inside of the active material is the true density of the particle of the negative electrode active material excluding the carbon coat. The density of the carbon coat is the true density of the carbon coat of the negative electrode active material.

All of the densities ρ, ρ', and ρ" can be determined through dry density measurement by a fixed volume expansion method. The density ρ of the present negative electrode active material 1 is usually about from 2.1 to 2.4.

The density of the carbon coat may be determined by directly measuring the true density of the carbon coat peeled off from the present negative electrode active material 1 or may be determined by calculation or the like. For example, the density of only the carbon coat may be calculated by producing several points of the plot of the content (mass%) of the carbon coat against the density of the present negative electrode active material 1 and extrapolating the point where the content of the carbon coat becomes 100 mass% by linear approximation.

Alternatively, the silicon component is dissolved from the present negative electrode active material 1, and the true density of the insoluble portion may be directly measured.

In the expression (1), A is the amount of the carbon coat and is shown by, as in the above, mass% when the mass of the present negative electrode active material 1 is defined as 100 mass%. The amount of the carbon coat can be determined by TG-DTA, elemental analysis, or the like.

Traditionally, porosity is the proportion of voids in the entire particle, and pores and internal voids are included. The definition of the porosity (%) is usually defined by the following expression:

Porosity (%) = (1 - apparent density/true density) × 100.

In the expression, the apparent density is the density when the internal voids are included, and the porosity defined by the expression above is the voids excluding the internal voids of the particle. As described above, in order

to suppress the disruption of the active material particle having the carbon coat, the gap between the carbon coat and the inside thereof is important, and it is necessary to evaluate the porosity of the gap portion. As the definition of porosity, various definitions have been proposed including those of the porosities defined in PTLs 7 and 8, but the correlation of the traditionally defined porosity with the density may be insufficient.

A method for calculating a porosity by visually recognizing void areas through observation of a particle cross section with an electron microscope or the like is known, but this method highly depends on the particle cross-sectional area, and it is difficult to exactly determine the gap between the carbon coat and the inside thereof.

In contract, the definition of the porosity by the above expression (1) is different from that by the traditional method, in the negative electrode active material including the carbon coat, the porosity of the gap between the carbon coat and the inside thereof can be more exactly evaluated by inserting the amount and density of the carbon coat in the expression (1).

The porosity V is preferably 9% or more and more preferably 11% or more from the viewpoint of suppressing the influence of expansion due to insertion of lithium ions. The porosity V is preferably 18% or less and more preferably 17% or less from the viewpoint of improving the energy density of the obtained secondary battery.

In order to adjust the true density and porosity V of the active material particle to the above ranges, for example, when the carbon coat treatment is performed, the gas flow rate, treatment time, and treatment temperature are controlled.

The present negative electrode active material 1 preferably includes a Si nanoparticle. The Si nanoparticle is as described above. The present negative electrode active material 1 includes the present secondary battery material and the carbonaceous phase as a matrix, more preferably includes a Si nanoparticle, and further preferably includes a Si nanoparticle dispersed in a matrix.

When the present negative electrode active material 1 includes a Si nanoparticle, the present secondary battery material including a Si nanoparticle may be used. Alternatively, the present secondary battery material not including a Si nanoparticle is used, and a Si nanoparticle is separately added thereto to make the present negative electrode active material 1, or the present secondary battery material including a Si nanoparticle is used, and a Si nanoparticle is further separately added thereto to make the present negative electrode active material 1. From the viewpoint of the dispersibility of the Si nanoparticle, it is preferable to use the present secondary battery material including a Si nanoparticle.

From the viewpoint of the charge and discharge performance and the capacity retention when the present negative electrode active material 1 is used as a negative electrode active material, the volume average particle diameter of the Si nanoparticle is preferably from 10 nm to 300 nm, more preferably from 20 nm to 250 nm, and further preferably from 30 nm to 200 nm.

The volume average particle diameter is as described above.

The specific surface area of the Si nanoparticle is preferably from 100 $m^2/g$ to 400 $m^2/g$ from the viewpoint of the electric capacity and the initial Coulombic efficiency.

The specific surface area is a value determined by a BET method, and the measurement method is as described above.

The specific surface area of the Si nanoparticle is more preferably from 100 $m^2/g$ to 300 $m^2/g$ and further preferably from 100 $m^2/g$ to 230 $m^2/g$ from the viewpoint of the electric capacity and the initial Coulombic efficiency.

The shape of the Si nanoparticle may be granular, acicular, or flake-like, but is preferably crystalline. When the Si nanoparticle is crystalline, in an X-ray diffraction, the crystallite diameter obtained from a diffraction peak pertaining to Si (111) is preferably in a range of from 5 nm to 14 nm from the viewpoint of the initial Coulombic efficiency and the capacity retention rate. The crystallite diameter is more preferably 12 nm or less and further preferably 10 nm or less.

The shape of the present negative electrode active material 1 may be granular, acicular, or flake-like. From the viewpoint of the charge and discharge performance when the present negative electrode active material 1 is used as the negative electrode active material of a secondary battery, the length of the Si nanoparticle in the long axis direction is preferably from 30 nm to 300 nm, and the thickness is preferably from 1 nm to 60 nm. From the viewpoint of the charge and discharge performance when used as a negative electrode active material, the Si nanoparticle preferably has a needle-like or flake-like shape having a ratio of the thickness to the length, i.e., a so-called aspect ratio, of 0.5 or less.

As the form of the Si nanoparticle, the average particle diameter can be measured by dynamic light scattering, but a sample with the above aspect ratio can be identified more easily and precisely by using an analysis means with a transmission electron microscope (TEM) or a field emission scanning electron microscope (FE-SEM). When the negative electrode active material contains the secondary battery material of the present invention, the sample is cut with a focused ion beam (FIB), and the cross section can be observed with an FE-SEM. Alternatively, the sample is sliced, and the state of the Si particle can be identified by TEM observation.

The aspect ratio of the Si nanoparticle is the calculation result based on 50 particles in the main part of the sample within the field of view in a TEM image.

The Si nanoparticle preferably includes silicon oxide near the surface from the viewpoint of an excellent balance between the initial Coulombic efficiency and the capacity retention rate.

When the Si nanoparticle includes silicon oxide, the surface of the Si nanoparticle is preferably coated with a

silicon dioxide film, which is an oxide film of silicon.

The Si nanoparticle can be obtained by, for example, pulverizing 0 value silicon lumps such that the average particle diameter is within the above-mentioned range.

The pulverizer that is used in pulverization is as mentioned above, and the pulverization may be wet pulverization using an organic solvent. As the organic solvent, for example, alcohols and ketones can be suitably used, but aromatic hydrocarbon solvents such as toluene, xylene, naphthalene, and methylnaphthalene can also be used.

The obtained silicon particle can be formed into a Si nanoparticle by controlling the conditions of a bead mill, such as the bead particle diameter, blending ratio, number of rotations, and pulverization time, and performing classification and so on.

When a matrix is present in the inside of the present negative electrode active material 1, the Si nanoparticle is preferably dispersed in the matrix. The number of the Si nanoparticles in the matrix is at least 2 or more, and the upper limit of the number is not particularly limited.

The matrix phase is preferably a matrix including the present secondary battery material, and the matrix phase preferably includes the carbonaceous phase and the present secondary battery material.

If the average particle diameter of the negative electrode active material is too small, as the specific surface area increases significantly, when the active material is used in a secondary battery, the amount of produced SEI during charging and discharging increases. Consequently, the reversible charge and discharge capacity per unit volume may decrease. When the average particle diameter is too large, the present secondary battery material may peel off from the current collector during electrode film production.

Accordingly, the volume average particle diameter of the present negative electrode active material 1 is preferably 2 um or more and 15 um or less. The volume average particle diameter of the present negative electrode active material 1 is more preferably 2.5 um or more and particularly preferably 3.0 um or more. In addition, the volume average particle diameter of the present negative electrode active material 1 is more preferably 12 um or less and particularly preferably 10 um or less. The volume average particle diameter is as described above.

The present negative electrode active material 1 preferably has a specific surface area of 0.3 $m^2/g$ or more and 10 $m^2/g$ or less. The specific surface area of the present negative electrode active material 1 is more preferably 0.5 $m^2/g$ or more and particularly preferably 1 $m^2/g$ or more. In addition, the specific surface area of the present negative electrode active material 1 is preferably 9 $m^2/g$ or less and particularly preferably 8 $m^2/g$ or less. When the specific surface area is within the above range, the absorption amount of the solvent during electrode production can be appropriately maintained, and the amount of the binding agent used for maintaining the binding property can also be appropriately maintained. The specific surface area is a value determined by a BET method and can be determined by a nitrogen gas adsorption measurement, for example, using a specific surface area measurement apparatus.

When the present negative electrode active material 1 includes a carbonaceous phase and the present secondary battery material as the matrix, in the Raman spectrum of the present negative electrode active material 1, as in the present secondary battery material, a scattering peak at around 1590 $cm^{-1}$ pertaining to the G band of a graphite long-period carbon lattice structure and a scattering peak at around 1330 $cm^{-1}$ pertaining to the D band of a graphite short-period carbon lattice structure with disorder and a defect are observed. The intensity ratio, I (G band)/I (D band), of the scattering intensity of the D band, I (D band), to the scattering peak intensity of the D band, I (G band), is preferably 0.7 or more and 2 or less. The scattering peak intensity ratio, I (G band)/I (D band), is more preferably 0.7 or more and 1.8 or less. When the scattering peak intensity ratio, I (G band)/I (D band), is within the above range, the carbonaceous phase in the matrix can be as follows.

As described above, a part of carbon atoms of the carbonaceous phase are bonded to a part of silicon atoms in the silicon-oxygen-carbon skeleton, and electron transfer between silicon atoms in the inside and the surface of the silicon-oxygen-carbon skeleton and the carbonaceous phase becomes easier. Consequently, the insertion and elimination reactions of lithium ions proceed rapidly during charging and discharging when the present negative electrode active material 1 is used in a secondary battery, and it is inferred that the charge and discharge characteristics are improved. The negative electrode active material may expand and contract by the insertion and elimination reactions of lithium ions, but it is inferred that the expansion and contraction of the entire negative electrode active material are relieved by the presence of the carbonaceous phase near the present negative electrode active material 1 to show an effect of largely improving the capacity retention rate.

The carbonaceous phase is formed as a result of thermal decomposition of a silicon-containing compound and a carbon source resin in an inert gas atmosphere, as described in the manufacturing of the present secondary battery material. Specifically, the carbonizable portions in the molecular structures of the silicon-containing compound and the carbon source resin become carbon components through high-temperature thermal decomposition in an inert atmosphere, and a part of such carbon is bonded to a part of the silicon-oxygen-carbon skeleton. The carbonizable component is the same as above and is preferably aromatic.

An effect of decreasing the resistance of the present negative electrode active material 1 is expected by the presence of free carbon as the carbonaceous phase. When the present negative electrode active material 1 is used as

the negative electrode of a secondary battery, it is inferred that the reaction in the inside of the present negative electrode active material 1 occurs uniformly and smoothly to give a secondary battery active material with an excellent balance between the charge and discharge performance and the capacity retention rate. The free carbon can be introduced from only the silicon-containing compound, but it is expected to increase the free carbon abundance and its effect by using a carbon source resin in combination. The type of the carbon source resin is not particularly limited, but a carbon compound having a six-membered ring of carbon is preferable.

The present state of the free carbon can also be identified with a TG-DTA as described above, and the carbon amount can be quantitatively determined using a TG-DTA.

The present negative electrode active material 1 may include another third component as needed, in addition to the above components.

Examples of the third component include silicate compounds (hereinafter, also referred to as "the present silicate compound") of at least one metal selected from the group consisting of Li, K, Na, Ca, Mg, and Al.

The silicate compound is generally a compound including an anion having a structure in which one or several silicon atoms as a center are surrounded by an electronegative ligand, and the present silicate compound is a salt of at least one metal selected from the group consisting of Li, K, Na, Ca, Mg, and Al and a compound including the anion above.

As the compound including the anion, silicate ions, such as orthosilicate ion ($SiO_4^{4-}$) , metasilicate ion ($SiO_3^{2-}$), pyrosilicate ion ($Si_2O_7^{6-}$), and cyclic silicate ion ($Si_3O_9^{6-}$ or $Si_6O_{18}^{12-}$), are known. The present silicate compound is preferably a silicate compound that is a salt of a metasilicate ion and at least one metal selected from the group consisting of Li, K, Na, Ca, Mg, and Al. In the above metals, Li and Mg are preferable.

The present silicate compound includes at least one metal selected from the group consisting of Li, K, Na, Ca, Mg, and Al, and may include two or more of these metals. When two or more metals are included, one silicate ion may include multiple types of metals, or the silicate compound may be a mixture of silicate compounds including different metals. The present silicate compound may include another metal, as long as at least one metal selected from the group consisting of Li, K, Na, Ca, Mg, and Al is included.

The present silicate compound is preferably a lithium silicate compound or a magnesium silicate compound, more preferably lithium metasilicate ($Li_2SiO_3$) or magnesium metasilicate ($MgSiO_3$), and particularly preferably magnesium metasilicate ($MgSiO_3$).

The present silicate compound in a crystal state can be detected by a powder X-ray diffraction method (XRD), and the present silicate compound in an amorphous state can be confirmed by solid $^{29}$Si-NMR measurement.

In the present invention, examples of another preferable form of the negative electrode active material include a negative electrode active material (hereinafter, also referred to as "the present negative electrode active material 2") containing a Si nanoparticle, a carbonaceous phase, and the present secondary battery material, wherein

the carbonaceous phase embeds the Si nanoparticle,
the carbonaceous phase has a carbon 002 plane spacing of from 0.34 nm to 0.37 nm determined by XRD measurement, and
the specific surface area is from 0.01 $m^2/g$ to 20 $m^2/g$.

The carbon 002 plane spacing of the present negative electrode active material 2 can be measured as follows. That is, a sample folder is filled with the negative electrode active material including the carbonaceous phase to obtain an X-ray diffraction figure using Cu-K$\alpha$ rays as a radiation source. The peak position of the X-ray diffraction figure is determined with the 2$\theta$ value, and the carbon phase 002 plane spacing is calculated at a Cu-K$\alpha$ ray wavelength of 0.15418 nm by the following Bragg's formula:

$$d002 = \lambda/2 \cdot \sin\theta.$$

The specific surface area of the present negative electrode active material 2 can be measured as follows. That is, the nitrogen adsorption amounts at a relative pressure of liquid nitrogen temperature of 0.5 or less are determined at a plurality of points, and the specific surface area is calculated from the BET plots in a range where the heat of adsorption C value is positive and highly linear.

The Si nanoparticle and carbonaceous phase of the present negative electrode active material 2 are the same as above, and the preferable form is also the same as above.

In the present negative electrode active material 2, the carbonaceous phase that embeds the Si nanoparticle refers to a state in which the Si nanoparticle is dispersed in the carbonaceous phase, and the particle cross section can be observed by EDS (energy dispersive X-ray spectroscopy) with an SEM (scanning electron microscope) and confirmed with an electron probe microanalyzer (EPMA).

As described above, the carbonaceous phase is formed by heating a silicon-containing compound and a carbon

source resin in an inert gas atmosphere. The carbonizable portions in the molecular structures of the silicon-containing compound and the carbon source resin become carbon components to form a carbonaceous phase having a stacked layer structure, and as the carbonization further proceeds, graphitization proceeds. As the graphitization proceeds, the carbon 002 plane spacing of the carbonaceous phase approaches 0.3354 nm of ideal graphite.

The carbonaceous phase of the present negative electrode active material 2 has a layer structure, and the carbon 002 plane spacing determined by XRD measurement is from 0.34 nm to 0.37 nm.

When the carbon 002 plane spacing of the carbonaceous phase is from 0.34 nm to 0.38 nm, the negative electrode active material has good electron conductivity, and isolation of the Si nanoparticle due to volume expansion during charging is suppressed. As a result, it is possible to reduce the electric capacity loss of the Si nanoparticle.

Since the carbonaceous phase can become the coating material of the negative electrode active material particle, the electron conductivity between the particles of the negative electrode active material is improved, isolation of the negative electrode active material particle due to swelling during charging is suppressed, and the capacity retention rate when used in a secondary battery is improved.

The carbon 002 plane spacing determined by XRD measurement is preferably from 0.34 nm to 0.38 nm, more preferably from 0.345 nm to 0.375 nm, and further preferably from 0.35 nm to 0.37 nm from the viewpoint of Coulombic efficiency.

When the present negative electrode active material 2 contains a matrix as in the present negative electrode active material 1, the matrix preferably contains silicon oxycarbide and a fired product of a carbon source resin as described later, and preferably contains silicon oxycarbide and a fired product of a phenolic resin.

The present negative electrode active material 2 has a specific surface area of from 0.01 $m^2/g$ to 20 $m^2/g$. From the viewpoint of the amount of the absorbed solvent during electrode production and the amount of the used binding agent for maintaining the binding property, the present negative electrode active material 2 preferably has a specific surface area of 1 $m^2/g$ or more and more preferably 3 $m^2/g$ or more. The present negative electrode active material 2 preferably has a specific surface area of 18 $m^2/g$ or less and more preferably 10 $m^2/g$ or less. The specific surface area is a value determined by a BET method and can be determined by nitrogen gas absorption measurement, for example, using a specific surface area measurement apparatus.

The present negative electrode active material 2 preferably has a true density of from 1.8 $g/cm^3$ to 2.5 $g/cm^3$. The true density is preferably 1.82 $g/cm^3$ or more and more preferably 1.85 $g/cm^3$ or more from the viewpoint of improving the energy density of the obtained secondary battery.

In addition, the present negative electrode active material 2 preferably has a true density of 2.3 $g/cm^3$ or less and more preferably 2.1 $g/cm^3$ or less from the relationship with porosity.

The true density is a value measured using a true density measurement apparatus and can be determined by applying a pressure to a sample chamber accommodating a sample by a helium gas, then determining the volume of the sample from a volume change caused when the valve is opened to diffuse the gas into an expansion chamber, and dividing the volume of the sample by the sample weight.

The mass spectrometric loss rate of the present negative electrode active material 2 in from 100°C to 700°C in TG analysis in a dry air flow is preferably from 10% to 70% from the viewpoint of the structure formation of the negative electrode active material.

The mass spectrometric loss rate can be determined by TG-DTA measurement in the conditions of from 100°C to 700°C in a dry air flow, as described above.

The mass spectrometric loss rate of the present negative electrode active material 2 in from 100°C to 700°C in TG analysis in a dry air flow is more preferably from 15% to 65% and further preferably from 20% to 60%.

As in the present negative electrode active material 1, the present secondary battery material containing N tends to have excellent charge and discharge performance and capacity retention rate when used as a negative electrode material. Accordingly, the secondary battery material used in the present negative electrode active material 2 also preferably includes N.

When the present negative electrode active material 2 includes N, the content of N is, from the viewpoint of the charge and discharge performance and the capacity retention rate, preferably 0.2 mass% or more, more preferably 0.3 mass% or more, and further preferably 0.4 mass% or more when the total mass of Si, O, C, and N included in the present negative electrode active material 2 is defined as 100 mass%.

In addition, the content of N is, from the viewpoint of the charge and discharge performance and the capacity retention rate, preferably 2.5 mass% or less, more preferably 2.3 mass% or less, and further preferably 2.0 mass% or less.

Each mass of Si, O, C, and N in the present negative electrode active material 2 can be determined by the same method as in the present secondary battery material.

The content of the present secondary battery material contained in the present negative electrode active material 2 is, from the viewpoint of the electric capacity, preferably from 0.1 mass% to 19 mass% when the mass of the present negative electrode active material 2 is defined as 100 mass%. The present negative electrode active material 2 preferably includes a Si nanoparticle in addition to the present secondary battery material, and when the present negative electrode

active material 2 includes a carbon coat as described later, it is preferable to include a Si nanoparticle and the carbon coat.

When the present negative electrode active material 2 includes the present secondary battery material and a Si nanoparticle, the mass of the present negative electrode active material 2 is the total mass of the present secondary battery material and the Si nanoparticle. When the present negative electrode active material 2 includes the present secondary battery material, a Si nanoparticle, and a carbon coat, the mass of the present negative electrode active material 2 is the total mass of the present secondary battery material, the Si nanoparticle, and the carbon coat.

Since the present negative electrode active material 2 includes the Si nanoparticle, the present negative electrode active material 2 preferably satisfies, in the chemical shift value obtained from a $^{29}$Si-NMR spectrum, the following expression (2):

$$0.2 < A/B < 5 \quad (2).$$

In the above expression, A represents the integrated intensity of a peak in a range of from -70 ppm to -90 ppm pertaining to Si (0 value), and B represents the integrated intensity of a peak in a range of from -90 ppm to -130 ppm pertaining to bond in $SiO_4$.

In the present negative electrode active material 2, when the chemical shift value obtained from the $^{29}$Si-NMR spectrum satisfies the above expression (2), the ratio of the Si particle with 0 value in the negative electrode active material and the $SiO_4$ present in the silicon oxycarbide is a ratio at which the Si particle easily expresses the performance, and the charge and discharge performance when used in the secondary battery, the capacity retention rate is particularly excellent. The A/B is more preferably in a range of $0.8 \leq A/B \leq 2.9$ and further preferably in a range of $0.9 \leq A/B \leq 2.8$.

The shape of the present negative electrode active material 2 may be granular, acicular, or flake-like. The present negative electrode active material 2 may preferably have a volume average particle diameter of from 0.5 um to 10 um and more preferably from 2 um to 8 um. When the volume average particle diameter is too small, as the specific surface area increases significantly, when used in a secondary battery, the amount of produced SEI during charging and discharging increases. Consequently, the reversible charge and discharge capacity per unit volume may decrease. When the volume average particle diameter is too large, the present secondary battery material may peel off from the current collector during electrode film production. The method for measuring the volume average particle diameter is the same as above.

Since the present negative electrode active material 2 includes the present secondary battery material, in the infrared analysis of the present negative electrode active material 2, it is preferable that there is no absorption spectrum derived from Si-H stretching vibration in from 2000 $cm^{-1}$ to 2200 $cm^{-1}$. The absence of an absorption spectrum derived from Si-H stretching vibration in from 2000 $cm^{-1}$ to 2200 $cm^{-1}$ means that lithium ions can be efficiently occluded, leading to an improvement in the charge and discharge capacity.

The absence of an absorption spectrum derived from Si-H stretching vibration means, as in above, that the absorption intensity of the absorption spectrum derived from Si-H stretching vibration to the absorption intensity of the absorption spectrum in a range from 900 $cm^{-1}$ to 1200 $cm^{-1}$ is 0.1% or less and more preferably 0.05% or less.

The present negative electrode active material 2 may include a silicate compound or a carbon coat.

The silicate compound and the carbon coat are the same as in the present negative electrode active material 1, and the preferable forms are also the same.

Since the negative electrode active materials 1 and 2 (hereinafter, both are collectively referred to as "the present negative electrode active material") are excellent in the charge and discharge capacity, the initial efficiency, and the capacity retention rate, the secondary battery having a battery negative electrode including the present negative electrode active material exhibits good charge and discharge characteristics.

Specifically, a slurry constituted by including the present negative electrode active material, an organic binding agent, and other components such as a conductive assistant as needed can be used as a negative electrode in a thin film form on current collect copper foil. It is also possible to produce a negative electrode by adding a carbon material such as graphite to the slurry.

Examples of the carbon material include natural graphite, artificial graphite, and amorphous carbon such as hard carbon and soft carbon.

The negative electrode obtained as above has a high capacity and an excellent capacity retention rate by including the present negative electrode active material and further becomes a secondary battery negative electrode also having an excellent initial Coulombic efficiency. The negative electrode can be obtained by, for example, kneading the secondary battery negative electrode active material of the present invention, an organic biding material as a binder, and a solvent with a dispersing device such as a stirrer, a ball mill, a super sand mill, and a pressurized kneader to prepare a negative electrode material slurry, and applying this slurry to a current collector to form a negative electrode layer. Alternatively, the negative electrode can also be obtained by molding a paste of a negative electrode material slurry into a shape of a sheet, a pellet, or the like and integrating the paste with a current collector.

Examples of the organic binding agent include a styrene-butadiene rubber copolymer (SBR); unsaturated carboxylic acid copolymers, such as a (meth)acrylic copolymer, of an ethylenically unsaturated carboxylate, such as methyl (meth)acrylate, ethyl (meth)acrylate, butyl (meth)acrylate, (meth)acrylonitrile, and hydroxyethyl (meth)acrylate, and an ethylenically unsaturated carboxylic acid, such as acrylic acid, methacrylic acid, itaconic acid, fumaric acid, and maleic acid; and a polymer compound, such as polyvinylidene fluoride, polyethylene oxide, polyepichlorohydrin, polyphosphazene, polyacrylonitrile, polyimide, polyamideimide, and carboxymethyl cellulose (CMC).

These organic binding agents are dispersed or dissolved in water or dissolved in an organic solvent such as N-methyl-2-pyrrolidone (NMP) depending on the respective physical properties. The content rate of the organic binding agent in the negative electrode layer of a lithium ion secondary battery negative electrode is preferably from 1 mass% to 30 mass%, more preferably from 2 mass% to 20 mass%, and further preferably from 3 mass% to 15 mass%.

When the content rate of the organic binding agent is 1 mass% or more, the adhesion is better, and the disruption of the negative electrode structure due to expansion and contraction during charging and discharging is more suppressed. In contrast, when the content rate is 30 mass% or less, an increase in the electrode resistance is more suppressed.

In such a range, the negative electrode active material of the present invention has high chemical stability and can adopt an aqueous binder and therefore is easy to handle in terms of practical use.

The negative electrode material slurry may be mixed with a conductive assistant as needed. Examples of the conductive assistant include carbon black, graphite, acetylene black, and oxides and nitrides exhibiting electrical conductivity. The amount of the conductive assistant used may be from about 1 mass% to 15 mass% with respect to the negative electrode active material of the present invention.

As the material and shape of the current collector, for example, copper, nickel, titanium, or stainless steel may be used in a foil, perforated foil, or mesh-like strip. Alternatively, a porous material, such as a porous metal (foaming metal) or carbon paper, can also be used.

Examples of the method for applying the negative electrode material slurry to a current collector include a metal mask printing method, an electrostatic coating method, a dip coating method, a spray coating method, a roll coating method, a doctor blade method, a gravure coating method, and a screen printing method. After the application, it is preferable to perform rolling treatment using flat plate press, calender roll, or the like as needed.

The negative electrode material slurry is formed into a sheet or pellet, and this slurry can be integrated with the current collector by, for example, rolling, pressing, or a combination thereof.

The negative electrode layer formed on the current collector and the negative electrode layer integrated with the current collector are preferably heat-treated depending on the used organic binding agent. For example, when an aqueous styrene-butadiene rubber copolymer (SBR) or the like is used, the heat treatment may be performed in from 100°C to 130°C. When an organic binding agent with polyimide or polyamideimide as a main skeleton is used, the heat treatment may be preferably performed in from 150°C to 450°C.

This heat treatment promotes the removal of the solvent and the increase of strength due to curing of the binder, and adhesion between particles and between the particle and the current collector can be improved. The heat treatment is preferably performed in an inert atmosphere of helium, argon, nitrogen, or the like or in a vacuum atmosphere in order to prevent oxidation of the current collector during the treatment.

After the heat treatment, the negative electrode is preferably pressed (pressure treatment). In a negative electrode using the negative electrode active material of the present invention, the electrode density is preferably from 1 $g/cm^3$ to 1.8 $g/cm^3$, more preferably from 1.1 $g/cm^3$ to 1.7 $g/cm^3$, and further preferably from 1.2 $g/cm^3$ to 1.6 $g/cm^3$. The adhesion and the volume capacity density of the electrode tend to be improved with an increase of the electrode density, but if the density is too high, the void in the electrode decreases to weaken the effect of suppressing the volume expansion of silicon and so on and to decrease the capacity retention rate. Accordingly, an optimum range is selected.

A negative electrode including the present negative electrode active material is excellent in the charge and discharge characteristics and is therefore suitably used in a secondary battery. The secondary battery including such a negative electrode is preferably a nonaqueous electrolyte secondary battery or a solid electrolyte secondary battery. In particular, when used as the negative electrode of a nonaqueous electrolyte secondary battery, the excellent performance is expressed.

A secondary battery including the present negative electrode active material, for example, when used in a wet electrolyte secondary battery, can be configured by disposing a positive electrode and a negative electrode including the negative electrode active material of the present invention so as to face each other with a separator therebetween and injecting an electrolyte solution thereinto.

The positive electrode can be obtained by forming a positive electrode layer on the surface of the current collector, as in the negative electrode. The current collector in this case can be a metal or alloy of aluminum, titanium, stainless steel, or the like formed into a foil, perforated foil, mesh-like strip.

The positive electrode material used in the positive electrode layer is not particularly limited. When a lithium ion secondary battery, among nonaqueous electrolyte secondary batteries, is produced, for example, a metal compound, metal oxide, metal sulfide, or electrically conductive polymer material that can dope or intercalate lithium ions may be

used. For example, lithium cobaltate ($LiCoO_2$), lithium nickelate ($LiNiO_2$), lithium manganate ($LiMnO_2$), a complex oxide thereof ($LiCoxNiyMnzO_2$, x + y + z = 1), lithium manganese spinel ($LiMn2O_4$), lithium vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivine-type $LiMPO_4$ (M: Co, Ni, Mn, or Fe), an electrically conductive polymer such as polyacetylene, polyaniline, polypyrrole, polythiophene, and polyacene, and porous carbon can be used alone or as a mixture.

As the separator, for example, non-woven fabric, cloth, a microporous film, or a combination thereof of which the main component is polyolefin such as polyethylene and polypropylene can be used. When the nonaqueous electrolyte secondary battery to be produced has a structure in which the positive electrode and the negative electrode are not in direct contact with each other, there is no need to use a separator.

As the electrolytic solution, a so-called organic electrolytic solution prepared by, for example, dissolving a lithium salt such as $LiClO_4$, $LiPF_6$, $LiAsF_6$, $LiBF_4$, and $LiSO_3CF_3$ in a non-aqueous solvent of one or a mixture of two or more components, such as ethylene carbonate, propylene carbonate, butylene carbonate, vinylene carbonate, fluoroethylene carbonate, cyclopentanone, sulfolane, 3-methylsulfolane, 2,4-dimethylsulfolane, 3-methyl-1,3-oxazolidin-2-one, γ-butyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate, and ethyl acetate, can be used.

The structure of the secondary battery including the present negative electrode active material is not particularly limited, but is usually that in which a positive electrode, a negative electrode, and a separator to be disposed as needed are wound in a flat spiral form to make a wound electrode plate group or are stacked in a flat plate form to make a laminated electrode plate group or a structure in which such an electrode plate group is enclosed in an envelope. In a half-cell that is used in Examples of the present invention, the main constituent of the negative electrode is the present secondary battery material, and simple evaluation is performed using metal lithium for the counter electrode. This is for more clearly comparing cycle characteristics of the active material itself. The cycle characteristics can be improved by adding a small amount of the present negative electrode active material to a mixture of which the main constituent is a graphite active material (capacity: about 340 mAh/g) to keep the negative electrode capacity to about 400 to 700 mAh/g which significantly exceeds existing negative electrode capacity.

The secondary battery including the present negative electrode active material is not particularly limited, but is used as a paper-type battery, a button-type battery, a coin-type battery, a stacked-type battery, a cylinder-type battery, or a square-type battery. The present negative electrode active material can also be applied to general electrochemical devices whose charging and discharging mechanism is insertion and elimination of lithium ions, such as a hybrid capacitor and a lithium secondary battery.

The present secondary battery material can be manufactured by, for example, a method including the following steps 1 to 3. The following steps are an example of a method using a polysiloxane compound as the Si-containing compound and including a Si nanoparticle, but the method is not limited thereto. For example, as the Si-containing compound, a commercially available silane compound such as a silane coupling agent and tetraalkoxysilanes may be used.

Step 1: A Si (0 value) slurry pulverized by a wet method is mixed with a polysiloxane compound and aggregate including a carbon source resin, and the mixture is stirred and dried to obtain a precursor.
Step 2: The precursor obtained in the step 1 is fired in an inert atmosphere within a highest reaching temperature range of 1000°C to 1180°C to obtain a fired product.
Step 3: The fired product obtained in the step 2 is pulverized to obtain a secondary battery material.

Each step will now be described.

<Step 1>

(Si (0 value) slurry)

The wet-pulverized Si (0 value) slurry to be used in the step 1 can be prepared by pulverizing a silicon particle with a wet powder pulverizer using an organic solvent. A dispersant may be used for facilitating the pulverization of the silicon particle in an organic solvent. The wet powder pulverizer is not particularly limited, and examples thereof include a roller mill, a high-speed rotary pulverizer, a container-driven mill, and a bead mill.

In the wet pulverization, a silicon particle is preferably dispersed until a Si nanoparticle is given.

The organic solvent used in the wet method is an organic solvent that does not chemically react with silicon, and examples thereof include ketones such as acetone, methyl ethyl ketone, methyl isobutyl ketone, and diisobutyl ketone; alcohols such as ethanol, methanol, n-propyl alcohol, and isopropyl alcohol; and aromatics such as benzene, toluene, and xylene.

As the dispersant, an aqueous or non-aqueous dispersant can be used. In order to suppress excessive oxidation of the surface of the silicon particle, a non-aqueous dispersant is preferably used. Examples of the type of the non-aqueous dispersant are a high molecular type such as polyether-based, polyalkylene polyamine-based, and polycarboxylic acid partial alkyl ester-based types, a low molecular type such as polyhydric alcohol ester-based and alkylpolyamine-based types, and an inorganic type such as polyphosphate-based type. The concentration of silicon in the Si (0 value) slurry is not particularly limited, but when the solvent and a dispersant as needed are included, the amount of the Si particle is preferably in a range of from 5 mass% to 40 mass% and more preferably from 10 mass% to 30 mass% when the total amount of the dispersant and the Si particle is defined as 100 mass%.

(Polysiloxane compound)

The polysiloxane compound used in the step 1 is a resin having at least one of a polycarbosilane structure, a polysilazane structure, a polysilane structure, and a polysiloxane structure. The resin may a resin including only these structures or a composite resin including at least one of these structures as a segment and chemically bonding to another segment. Examples of the form of conjugation are graft copolymerization, block copolymerization, random copolymerization, and alternating copolymerization, such as a composite resin having a graft structure in which a polysiloxane segment is chemically bonded to the side chain of a polymer segment, and a composite resin having a block structure in which a polysiloxane segment is chemically bonded to the end of a polymer segment.

The polysiloxane segment preferably has a structural unit represented by the following formula (S-1) and/or the following formula (S-2). In particular, the polysiloxane compound more preferably has a carboxy group, an epoxy group, an amino group, or a polyether group at the side chain or the end of a siloxane bond (Si-O-Si) main skeleton.

[Chem 1]

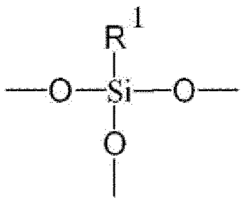

(S-1)

[Chem 2]

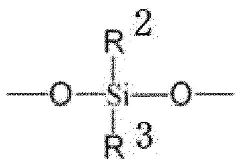

(S-2)

(In the formulae (S-1) and (S-2), $R^1$ represents an aromatic hydrocarbon substituent or an alkyl group, an epoxy group, or a carboxy group; and $R^2$ and $R^3$ each represent an alkyl group, a cycloalkyl group, an aryl group, an aralkyl group, an epoxy group, or a carboxy group.)

Examples of the alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylbutyl group, a 2-methylbutyl group, a 1,2-dimethylpropyl group, a 1-ethylpropyl group, a hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, and a 1-ethyl-1-methylpropyl group. Examples of the cycloalkyl group include a cyclopropyl group, a cyclobutyl group, a cyclopentyl group, and a cyclohexyl group.

Examples of the aryl group include a phenyl group, a naphthyl group, a 2-methylphenyl group, a 3-methylphenyl group, a 4-methylphenyl group, a 4-vinylphenyl group, and a 3-isopropylphenyl group.

Examples of the aralkyl group include a benzyl group, a diphenylmethyl group, and a naphthylmethyl group.

Examples of the polymer segment other than the polysiloxane segment of the polysiloxane compound include vinyl polymer segments such as an acrylic polymer, a fluoroolefin polymer, a vinyl ester polymer, an aromatic vinyl polymer, and a polyolefin polymer; and polymer segments such as a polyurethane polymer segment, a polyester polymer segment, and a polyether polymer segment. In particular, the vinyl polymer segment is preferable.

The polysiloxane compound may be a composite resin in which a polysiloxane segment and a polymer segment are bonded to each other via the structure shown by the following formula (S-3), and may have a three-dimensional net polysiloxane structure.

[Chem 3]

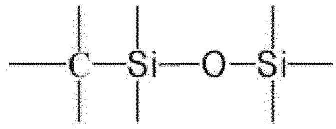

(S - 3)

(In the formula, the carbon atom is a carbon atom constituting the polymer segment, and two silicon atoms are silicon atoms constituting the polysiloxane segment.)

The polysiloxane segment of the polysiloxane compound may include a functional group that can react by heating, such as a polymerizable double bond in the polysiloxane segment. Heat treatment of the polysiloxane compound before thermal decomposition facilitates a crosslinking reaction to make the polysiloxane compound solid. Thus, the thermal decomposition treatment can be easily performed.

Examples of the polymerizable double bond include a vinyl group and a (meth)acryloyl group. The number of the polymerizable double bonds in the polysiloxane segment is preferably 2 or more, more preferably from 3 to 200, and further preferably from 3 to 50. The crosslinking reaction can be easily facilitated by using a composite resin having 2 or more polymerizable double bonds as the polysiloxane compound.

The polysiloxane segment may include a silanol group and/or a hydrolysable silyl group. Examples of the hydrolysable group in the hydrolysable silyl group include a halogen atom, an alkoxy group, a substituted alkoxy group, an acyloxy group, a phenoxy group, a mercapto group, an amino group, an amide group, an aminooxy group, an iminooxy group, and an alkenyloxy group. The hydrolysable silyl group becomes a silanol group by hydrolyzing these groups. Simultaneous with the thermal curing reaction, a hydrolysis condensation reaction proceeds between the hydroxy group in the silanol group and the hydrolysable group in the hydrolysable silyl group, and thereby a polysiloxane compound in a solid form can be obtained.

The silanol group in the present invention is a silicon-containing group having a hydroxy group that is directly bonded to a silicon atom. The hydrolysable silyl group in the present invention is a silicon-containing group having a hydrolysable group that is directly bonded to a silicon atom and is specifically, for example, a group represented by the following formula (S-4):

[Chem 4]

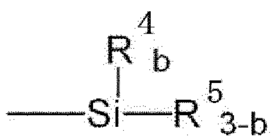

(S - 4)

(In the formula, $R^4$ is a monovalent organic group such as an alkyl group, an aryl group, or an aralkyl group; $R^5$ is a halogen atom, an alkoxy group, an acyloxy group, an allyloxy group, a mercapto group, an amino group, an amide group, an aminooxy group, an iminooxy group, or an alkenyloxy group; and b is an integer of from 0 to 2).

Examples of the alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylbutyl group, a 2-methylbutyl group, a 1,2-dimethylpropyl group, a 1-ethylpropyl group, a hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, and a 1-ethyl-1-methylpropyl group.

Examples of the aryl group include a phenyl group, a naphthyl group, a 2-methylphenyl group, a 3-methylphenyl group, a 4-methylphenyl group, a 4-vinylphenyl group, and a 3-isopropylphenyl group.

Examples of the aralkyl group include a benzyl group, a diphenylmethyl group, and a naphthylmethyl group.

Examples of the halogen atom include a fluorine atom, a chlorine atom, a bromine atom, and iodine atom.

Examples of the alkoxy group include a methoxy group, an ethoxy group, a propoxy group, an isopropoxy

group, a butoxy group, a sec-butoxy group, and tert-butoxy group.

Examples of the acyloxy group include formyloxy, acetoxy, propanoyloxy, butanoyloxy, pivaloyloxy, pentanoyloxy, phenylacetoxy, acetoacetoxy, benzoyloxy, and naphthoyloxy.

Examples of the allyloxy group include phenyloxy and naphthyloxy.

Examples of the alkenyloxy group include a vinyloxy group, an allyloxy group, a 1-propenyloxy group, an isopropenyloxy group, a 2-butenyloxy group, a 3-butenyloxy group, a 2-pentenyloxy group, a 3-methyl-3-butenyloxy group, and a 2-hexenyloxy group.

Examples of the polysiloxane segment having a structure unit represented by the formula (S-1) and/or the formula (S-2) include those having the following structures:

[Chem 5]

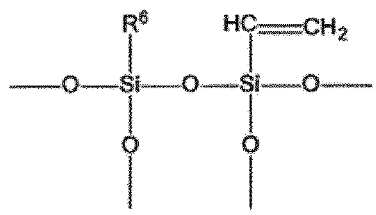
(1)

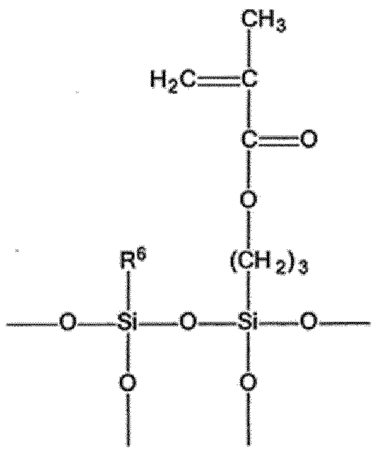
(2)

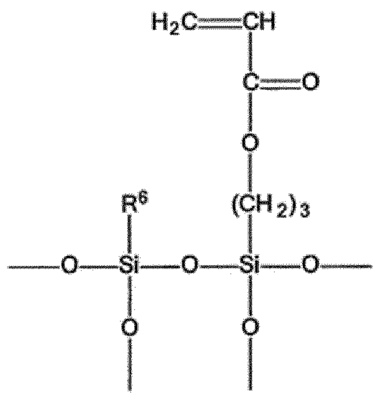
(3)

[Chem 6]

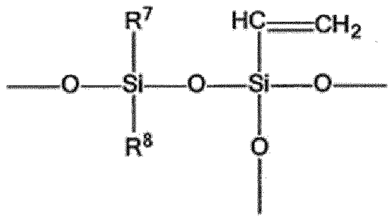

(4)

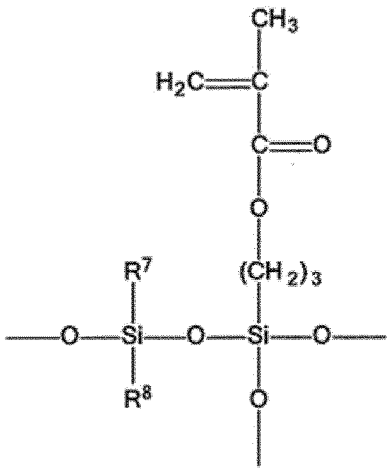

(5)

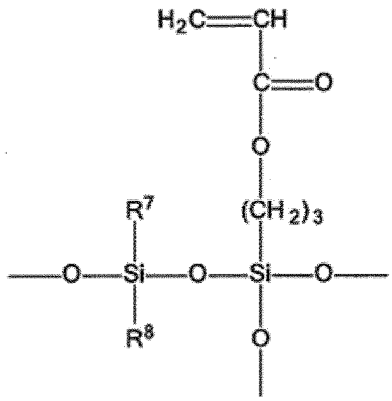

(6)

[Chem 7]

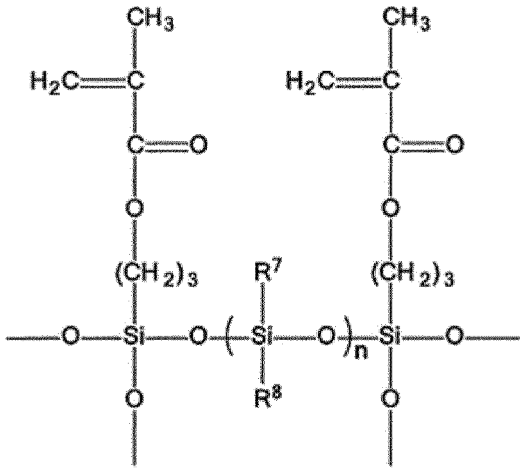

(7)

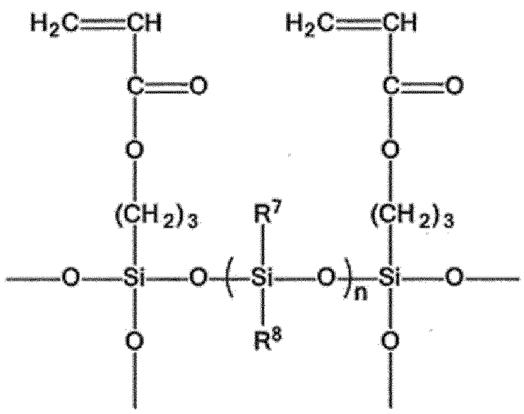

(8)

The polymer segment may include various functional groups as needed within a range that does not impair the effects of the present invention. As such a functional group, for example, a carboxyl group, a blocked carboxyl group, a carboxylic acid anhydride group, a tert-amino group, a hydroxy group, a blocked hydroxy group, a cyclocarbonate group, an epoxy group, a carbonyl group, a primary amide group, a secondary amide, a carbamate group, or a functional group represented by the following formula (S-5) can be used.

[Chem 8]

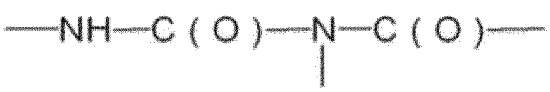

(S-5)

The polymer segment may have a polymerizable double bond such as a vinyl group and a (meth)acryloyl group.

The polysiloxane compound is preferably manufactured by, for example, a method shown by the following (1) to (3):

(1) A method in which a polymer segment containing a silanol group and/or a hydrolysable silyl group is prepared in advance as a raw material of the polymer segment, and this polymer segment is mixed with a silane compound containing a silane compound having a silanol group and/or hydrolysable silyl group and a polymerizable double bond to perform a hydrolysis condensation reaction;

(2) A method in which a polymer segment containing a silanol group and/or a hydrolysable silyl group is prepared in advance as a raw material of the polymer segment, polysiloxane is also prepared in advance by a hydrolysis condensation reaction of a silane compound containing a silane compound having a silanol group and/or hydrolysable

silyl group and a polymerizable double bond, and the polymer segment and the polysiloxane are mixed to perform a hydrolysis condensation reaction; and

(3) A method in which the polymer segment, a silane compound containing a silane compound having a silanol group and/or hydrolysable silyl group and a polymerizable double bond, and polysiloxane are mixed to perform a hydrolysis condensation reaction.

A polysiloxane compound is obtained by the above method.

Examples of the polysiloxane compound include CERANATE (registered trademark) series (organic and inorganic hybrid coating resin; manufactured by DIC Corporation) and COMPOCERAN SQ series (silsesquioxane hybrid; manufactured by Arakawa Chemical Industries, Ltd.).

(Carbon source resin)

The carbon source resin used in the step 1 is preferably a synthetic resin or natural chemical raw material having an aromatic functional group that has good miscibility with a polysiloxane compound during manufacturing a precursor and is carbonized by firing at high temperature in an inert atmosphere.

Examples of the synthetic resin include thermoplastic resins such as polyvinyl alcohol and polyacrylic acid and thermosetting resins such as a phenolic resin and a furan resin. Examples of the natural chemical raw material include heavy oils, specifically tar pitches such as coal tar, light tar oil, medium tar oil, heavy tar oil, naphthalene oil, anthracene oil, coal tar pitch, pitch oil, mesophase pitch, oxygen-crosslinked petroleum pitch, and heavy oil. From the viewpoint of cheap availability and impurity elimination, it is more preferable to use a phenolic resin.

In particular, in the step 1 of the present invention, the carbon source resin is preferably a resin including an aromatic hydrocarbon portion; the resin including an aromatic hydrocarbon portion is preferably a phenolic resin, an epoxy resin, or a thermosetting resin; and the phenolic resin is preferably a resol type.

Examples of the phenolic resin include Sumilite Resin series (resol-type phenolic resin, manufactured by Sumitomo Bakelite Co., Ltd.).

(Precursor)

Aggregate including the polysiloxane compound and the carbon source resin and the Si slurry are uniformly mixed and stirred, and then through desolventization and drying, a secondary battery material precursor (hereinafter, also referred to as "precursor") is obtained. The aggregate including the polysiloxane compound and the carbon source resin is preferably in a state in which the polysiloxane compound and the carbon source resin are uniformly mixed. The mixing is performed using an apparatus with dispersion and mixing functions, such as a stirrer, an ultrasonic mixer, and a premix disperser. In the process of desolventization and drying for the purpose of distilling the organic solvent, a dryer, a vacuum dryer, a spray dryer, or the like can be used.

The precursor preferably contains 3 mass% to 50 mass% of a silicon particle of Si (0 value), 15 mass% to 85 mass% of the solid content of a polysiloxane compound, and 3 mass% to 70 mass% of the solid content of a carbon source resin, and more preferably contains 8 mass% to 40 mass% of the solid content of a silicon particle, 20 to 70 mass% of the solid content of a polysiloxane compound, and 3 mass% to 60 mass% of the solid content of a carbon source resin.

The precursor preferably includes a phenolic resin as the carbon source resin, and the precursor preferably contains silicon oxycarbide and a phenolic resin.

<Step 2>

The step 2 is a step of firing the precursor obtained in the step 1 in an inert atmosphere in a highest reaching temperature range of 1000°C to 1180°C to completely decompose the thermally decomposable organic component and precisely controlling the firing conditions of another main component to obtain a fired product suitable for the secondary battery material of the present invention. Specifically, the polysiloxane compound and the carbon source resin of the raw material are converted to a SiOC skeleton and free carbon by the energy of high temperature treatment. That is, a matrix containing silicon oxycarbide and a fired product of the carbon source resin is obtained by firing. The fired product here is a product by decomposition or conversion at high temperature of an organic compound such as a carbon source resin wherein a part or all of the composition or structure is changed and is obtained by firing together with an inorganic compound having a carbon-containing group such as a polysiloxane compound.

In the fired product of the carbon source resin, all of the carbon source resin may be converted to carbon, or a part of the carbon source resin may be converted to carbon, and the residue may maintain the structure of the carbon source resin. The obtained matrix preferably contains silicon oxycarbide and the fired product of a phenolic resin. In the

fired product of the phenolic resin, all of the phenolic resin may be converted to carbon, or a part of the phenolic resin may be converted to carbon, and the residue may maintain the structure of the phenolic resin.

In the step 2, the precursor obtained in the step 1 is fired in an inert atmosphere according to the program of firing prescribed by the temperature-raising speed, the holding time at constant temperature, and so on. The highest reaching temperature is the highest temperature to be set and strongly affects the structure and performance of the secondary battery material as the fired product. In the present invention, the highest reaching temperature is from 1000°C to 1180°C, and thereby the microstructure of the secondary battery material holding the chemical bonding condition of Si and C can be precisely controlled, and oxidation of the silicon particle at excessively high-temperature firing can be avoided. Consequently, more excellent charge and discharge characteristics are obtained.

The firing method is not particularly limited, but a reaction apparatus having a heating function may be used in an inert atmosphere, and treatment by a continuous method or a batch method is possible. As the firing apparatus, a fluidized bed reactor, a rotary reactor, a vertical moving bed reactor, a tunnel furnace, a batch furnace, a rotary kiln, or the like can be appropriately selected according to the purpose.

<Step 3>

The step 3 is a step of pulverizing the fired product obtained in the step 2 and performing classification as needed to obtain a secondary battery material of the present invention. The pulverization may be performed in one stage or in several stages until the desired particle diameter is obtained. For example, when the fired product is lumps or agglomerates of 10 mm or more and is produced into an active material of 10 um, the fired product is roughly pulverized to a particle of about 1 mm with a jaw crusher, a roll crusher, or the like and then pulverized to 100 um with a grow mill, a ball mill, or the like and to 10 um with a bead mill, a jet mill, or the like. The particles produced by pulverization may include coarse particles, and in order to remove the coarse particles and when the particle size distribution is adjusted by removing fine powder, classification is performed. As the classifier to be used, an air classifier, a wet classifier, and so on can be used depending on the purpose. When coarse particles are removed, a classification method by passing through a sieve is preferable, because it reliably achieve the purpose. When a precursor mixture before firing is controlled to a shape with an approximate target particle diameter by spray drying or the like and the main firing is performed in the shape, it is no doubt that the pulverizing step can be omitted.

In the manufacturing process, true density of the present negative electrode active material 1 and the porosity defined by the expression (1) can be adjusted in the above ranges by controlling the gas flow rate in the carbon coating treatment and optimizing the treatment time and treatment temperature conditions. For example, increases in the gas flow rate and the treatment time can increase the amount of coating carbon and can adjust the porosity defined by the expression (1). An increase in the treatment temperature can increase the true density.

In the manufacturing process, the carbonaceous phase of the present negative electrode active material 2 can have the carbon 002 plane spacing and the specific surface area that are determined by XRD measurement in the ranges above by devising the composition and the mixing method of the carbon source resin and Si nanoparticle and the polysiloxane compound and further controlling the firing temperature. For example, when a polysiloxane compound is blended with a carbon source resin and heating treatment is performed, the silicon oxycarbide prevents the orientation of the carbon structure to broaden the carbon 002 plane spacing. An increase in the firing temperature proceeds the carbonization reaction to reduce the carbon 002 plane spacing.

When the present negative electrode active material includes a silicate compound of at least one metal selected from the group consisting of Li, K, Na, Ca, Mg, and Al, the active material including the silicate compound is obtained by adding a salt of at least one metal selected from the group consisting of Li, K, Na, Ca, Mg, and Al to a suspension obtained by mixing a slurry of a Si nanoparticle with a mixture of a polysiloxane compound and a carbon source resin and then performing the same procedure as in above.

Examples of the salt of at least one metal selected from the group consisting of Li, K, Na, Ca, Mg, and Al include halides, such as a fluoride, a chloride, and a bromide, hydroxides, and carbonates of these metals.

The metal salt may be two or more salts of a metal, a salt of two or more metals, or a mixture of salts of different metals.

The amount of the metal salt to be added to a suspension is preferably 0.01 to 0.4 in terms of molar ratio with respect to the molar number of the Si nanoparticle.

When the metal salt is soluble in an organic solvent, the metal salt is dissolved in an organic solvent and may be mixed with a suspension of a mixture of the polysiloxane compound and the carbon source resin or with a suspension of a Si nanoparticle when the present active material particle includes the Si nanoparticle. When the metal salt is insoluble in an organic solvent, the particle of the metal salt is dispersed in an organic solvent and may be mixed with a suspension of a mixture of the polysiloxane compound and the carbon source resin or with a suspension of a Si nanoparticle when the present active material particle includes the Si nanoparticle. The metal salt is preferably a nanoparticle having an average particle diameter of 100 nm or less from the viewpoint of improving the dispersion effect. As the organic solvent,

alcohols, ketones, and so on can be suitably used, but aromatic hydrocarbon solvents such as toluene, xylene, naphthalene, and methylnaphthalene can also be used.

When the present negative electrode active material includes the carbon coat, the present negative electrode active material including the carbon coat is obtained by coating at least a part of the surface of the fired product obtained by the above method with a carbon coat. The carbon coat is preferably an amorphous carbon coat obtained in a chemical vapor deposition apparatus, in a flow of a pyrolytic carbon source gas and a carrier inert gas, in a temperature range of from 700°C to 1000°C.

Examples of the pyrolytic carbon source gas include acetylene, ethylene, acetone, alcohol, propane, methane, and ethane.

Examples of the inert gas include nitrogen, helium, and argon, and nitrogen is usually used.

As described above, when the secondary battery material of the present invention is used as a negative electrode active material, provided are a negative electrode active material that gives a secondary battery having high charge and discharge capacity, initial efficiency, and capacity retention rate as a whole and having an excellent balance of these characteristics and a secondary battery material that is used in the negative electrode active material.

The secondary battery material obtained by the above method can be suitably used as a negative electrode active material. The obtained negative electrode active material can be used as a negative electrode by the above method and can be formed into a secondary battery having the negative electrode.

In particular, the present negative electrode active materials 1 and 2 are preferable from the viewpoint of giving a secondary battery having high charge and discharge capacity, initial efficiency, and capacity retention rate as a whole and having an excellent balance of these characteristics.

The present secondary battery material, the present negative electrode active materials 1 and 2 including the present secondary battery material, and a secondary battery including the present negative electrode active material have been described, but the present invention is not limited to the configurations of the above embodiments.

The present secondary battery material, the present negative electrode active materials 1 and 2 including the present secondary battery material, and a secondary battery including the present negative electrode active material may include other optional configurations in the configurations of the above embodiments or may be replaced with any configuration that exhibits the same function.

In the configurations of the above embodiments, the method of manufacturing the present secondary battery material may include any additional step or may be replaced with any step that causing the same function.

In the following description of Examples, Si represents the same material as "silicon".

EXAMPLES

The present invention will now be described in detail by Examples, but is not limited thereto.

In the configuration of the half-cell used in Examples of the present invention, the main constituent of the negative electrode is a silicon-containing active material, which is the present secondary battery material, and simple evaluation is performed using metal lithium for the counter electrode. This is for more clearly comparing cycle characteristics of the active material itself. In such a configuration, the cycle characteristics can be improved by adding a small amount of the present secondary battery material to a mixture of which the main constituent is a graphite active material having a capacity of about 340 mAh/g, while keeping the negative electrode capacity to about 400 to 700 mAh/g which significantly exceeds existing negative electrode capacity.

"Production of polysiloxane compound"

(Synthesis Example 1: Synthesis of condensate (a1) of methyltrimethoxysilane)

In a reaction vessel equipped with a stirrer, a thermometer, a dropping funnel, a cooling tube, and a nitrogen gas inlet, 1,421 parts by mass of methyltrimethoxysilane (hereinafter, also referred to as "MTMS") was charged, and the temperature was increased to 60°C. Subsequently, a mixture of 0.17 parts by mass of isopropyl acid phosphate (manufactured by SC Organic Chemical Co., Ltd., "Phoslex A-3") and 207 parts by mass of deionized water was dropwise added to the reaction vessel over 5 minutes, followed by stirring at 80°C for 4 hours to perform a hydrolysis condensation reaction.

The condensate obtained by the hydrolysis condensation reaction was distilled at a temperature of from 40°C to 60°C under a reduced pressure of 40 kPa at the start of methanol distillation until the reduced pressure finally became 1.3 kPa to remove the methanol generated in the reaction process and water. Consequently, a liquid containing 1,000 parts by mass of a condensate (a1) of MTMS having a number average molecular weight of 1,000 and 70 mass% of an active component. The active component is calculated by the value obtained by dividing the theoretical yield (parts by mass) when all of the methoxy groups of the silane monomer such as MTMS underwent a condensation reaction by the

actual yield (parts by mass) after the condensation reaction. This is represented by the following expression:

Active component = [theoretical yield (parts by mass) when all methoxy groups of silane monomer underwent condensation reaction]/[actual yield (parts by mass) after condensation reaction].

(Synthesis Example 2: Manufacturing of curable resin composition (1))

In a reaction vessel equipped with a stirrer, a thermometer, a dropping funnel, a cooling tube, and a nitrogen gas inlet, 150 parts by mass of n-butanol (hereinafter, also referred to as "n-BuOH"), 105 parts by mass of phenyltrimethoxysilane (hereinafter, also referred to as "PTMS"), and 277 parts by mass of dimethyldimethoxysilane (hereinafter, also referred to as "DMDMS") were charged and warmed to 80°C.

At the same temperature, a mixture containing 21 parts by mass of methyl methacrylate (hereinafter, also referred to as "MMA"), 4 parts by mass of butyl methacrylate (hereinafter, also referred to as "BMA), 3 parts by mass of butyric acid (hereinafter, also referred to as "BA), 2 parts by mass of methacryloyloxypropyltrimethoxysilane (hereinafter, also referred to as "MPTS"), 3 parts by mass of n-BuOH, and 0.6 parts by mass of butylperoxy-2-ethylhexanoate (hereinafter, also referred to as "TBPEH") was dropwise added to the reaction vessel over 6 hours. After the completion of the dropping, the reaction was further carried out at the same temperature for 20 hours to obtain an organic solvent solution of a vinyl polymer (a2-1) with a number average molecular weight of 10,000 having a hydrolysable silyl group.

Subsequently, a mixture of 0.04 parts by mass of Phoslex A-3 and 112 parts by mass of deionized water was dropwise added to the organic solvent solution over 5 minutes, and a hydrolysis condensation reaction was further carried out at the same temperature for 10 hours by stirring to obtain a liquid containing a composite resin in which the hydrolysable silyl group of the vinyl polymer (a2-1) and the hydrolysable silyl group and silanol group of polysiloxane derived from the PTMS and DMDMS are bonded to each other.

To this liquid, 472 parts by mass of condensate (a1) of MTMS obtained in Synthesis Example 1 and 80 parts by mass of deionized water were added, and the hydrolysis condensation reaction was carried out at the same temperature for 10 hours by stirring. The resulting product was distilled under the same conditions as in Synthesis Example 1 to remove the generated methanol and water, and 250 parts by mass of n-BuOH was then added thereto to obtain 1,000 parts by mass of curable resin composition (1) including 60.1 mass% of the non-volatile component.

(Synthesis Example 3: Manufacturing of curable resin composition (2))

In a reaction vessel equipped with a stirrer, a thermometer, a dropping funnel, a cooling tube, and a nitrogen gas inlet, 150 parts by mass of n-BuOH, 249 parts by mass of PTMS, and 263 parts by mass of DMDMS were charged and warmed to 80°C.

Subsequently, at the same temperature, a mixture containing 18 parts by mass of MMA, 14 parts by mass of BMA, 7 parts by mass of BA, and 1 part by mass of acrylic acid (hereinafter, also referred to as "AA"), 2 parts by mass of MPTS, 6 parts by mass of n-BuOH, and 0.9 parts by mass of TBPEH was dropwise added to the reaction vessel over 5 hours. After the completion of the dropping, the reaction was further carried out at the same temperature for 10 hours to obtain an organic solvent solution of a vinyl polymer (a2-2) with a number average molecular weight of 20,100 having a hydrolysable silyl group.

Subsequently, a mixture of 0.05 parts by mass of A-3 and 147 parts by mass of deionized water was dropwise added to the organic solvent solution over 5 minutes, and the hydrolysis condensation reaction was carried out by further stirring at the same temperature for 10 hours to obtain a liquid containing a composite resin in which the hydrolysable silyl group of the vinyl polymer (a2-2) and the hydrolysable silyl group and silanol group of polysiloxane derived from the PTMS and DMDMS are bonded to each other.

Subsequently, to this liquid, 76 parts by mass of 3-glycidoxypropyltrimethoxysilane, 231 parts by mass of condensate (a1) of MTMS obtained in Synthesis Example 1, and 56 parts by mass of deionized water were added, and the hydrolysis condensation reaction was carried out at the same temperature for 15 hours by stirring. The resulting product was distilled under the same conditions as in Synthesis Example 1 to remove the generated methanol and water, and 250 parts by mass of n-BuOH was then added thereto to obtain 1,000 parts by mass of curable resin composition (2) including 60.0 mass% of the non-volatile component.

[Example 1]

A negative electrode active material of the present invention was manufactured as follows.

Zirconia beads (particle diameter range: 0.1 mm to 0.2 mm) and 400 mL of methyl ethyl ketone solvent (MEK)

were placed in the container (150 mL) of a small bead mill (Ultra Apex Mill UAM-015, manufactured by Hiroshima Metal & Machinery Co., Ltd.), and 70 g of a Si powder (manufactured by FUJIFILM Wako Pure Chemical Corporation, average particle diameter: 3 to 5 um) and a prescribed amount of a cationic dispersant solution (BYK JAPAN KK: BYK145) were added thereto, followed by bead mill wet pulverization for 5 hours to obtain a Si slurry in a dark brown liquid state. The Si pulverized particle had an average particle diameter (D50) of 60 nm by light scattering measurement and TEM observation.

To a mixture of 3.23 g of the curable resin composition (1) produced in the above Synthesis Example 2 and 27.8 g of a phenolic resin (Sumilite Resin PR-53416, manufactured by Sumitomo Bakelite Co., Ltd.), 14.3 g of the Si slurry in a brown liquid state was added such that the Si particle amount included in the product after high-temperature firing was 20 wt%. The resulting mixture was sufficiently mixed in a stirrer, and desolventization and reduced pressure drying were then performed to obtain a precursor. Subsequently, the precursor was fired at a high temperature of 1100°C for 4 hours in a nitrogen atmosphere, followed by pulverization with a planetary ball mill (Ball Mill P-6 Classic Line: manufactured by FRITSCH GmbH) using zirconia beads with a particle diameter of about 5 mm for 30 minutes to obtain a black solid of a negative electrode active material powder.

The obtained negative electrode active material powder had a composition ratio (molar ratio) of Si, O, and C of 1 : 1.5 : 8.7 in elemental analysis. The analysis of each element was performed with the following apparatuses. The O content was measured with an oxygen-hydrogen-nitrogen analyzer (TCH-600, manufactured by LECO Corporation), and the C content was measured with a carbon-sulfur analyzer (CS844, manufactured by LECO Corporation). The Si content was measured with an ICP-OES analyzer (Agilent 5110 ICP-OES, manufactured by Agilent Technologies, Inc.). The average particle diameter (D50) was about 5.7 um, and the specific surface area (BET) was 27.1 $m^2/g$. In the $^{29}Si$-NMR spectrum, a peak A in a range of from -70 ppm to -90 ppm and a peak B in a range of from -90 ppm to -130 ppm were detected, and the area ratio A/B was 0.8. Raman scattering analysis resulted in that a peak at around 1590 $cm^{-1}$ pertaining to the G band and a peak at around 1330 $cm^{-1}$ of the D band of carbon were observed, and the intensity ratio G/D was 0.79.

Subsequently, a half-cell and a full-cell were produced using the obtained negative electrode active material by the following method, and a secondary battery charge and discharge test was carried out.

A mixture slurry of an active material powder (80 parts), a conductive assistant (acetylene black, 10 parts), and a binder (CMC + SBR, 10 parts) was prepared and was formed into a film on copper foil. Subsequently, the film was dried under reduced pressure at 110°C and was produced into a half-cell with Li metal foil as a counter electrode. For this half-cell, the charge and discharge characteristics were evaluated using a secondary battery charge and discharge tester (manufactured by Meiden Hokuto Corporation) (cut-off voltage range: 0.005 to 1.5 V). The results of charge and discharge measurement were an initial discharge capacity of 1030 mAh/g and an initial (Coulombic) efficiency of 79.0%.

A positive electrode film was produced using, as the positive electrode materials, $LiCoO_2$ as the positive electrode active material and a monolayer sheet using aluminum foil as the current collector. Furthermore, a graphite powder, an active material powder, and a binder were mixed at a discharge capacity designed value of 450 mAh/g to produce a negative electrode. A full-cell cointype lithium ion secondary battery was produced using, as the nonaqueous electrolyte, a nonaqueous electrolyte solution obtained by dissolving lithium hexafluorophosphate in a 1/1 (volume ratio) mixture of ethylene carbonate and diethyl carbonate at a concentration of 1 mol/L and using, as a separator, a polyethylene microporous film with a thickness of 30 um. This lithium ion secondary battery was charged at a constant current of 1.2 mA (0.25 c based on positive electrode) at room temperature until the voltage of the test cell reached 4.2 V, after reaching 4.2 V, charging was performed by reducing the current so as to maintain the cell voltage at 4.2 V to determine the discharge capacity. The capacity retention rate of 100 cycles at room temperature was 97%.

[Examples 2 to 41 and Comparative Examples 1 to 4]

The curable resin composition (Synthesis Examples 1 to 3), the phenolic resin (Sumilite Resin PR-53416), and the Si slurry in Example 1 were changed as shown in Table 1. Negative electrode active materials were obtained as in Example 1 except that the time of wet pulverizing of the Si powder was 3 hours in Examples 30 and 31, the time of wet pulverizing of the Si powder was 1 hour in Comparative Example 4, and zirconia beads with a particle diameter of about 2 mm were used in Examples 25 and 26. The secondary battery materials obtained in Examples 1, 16, and 26 were subjected to FT-IR measurement by the conditions described below. The resulting spectra are shown in Figs. 1 to 3.

Secondary batteries were produced and evaluated as in Example 1 by directly using the secondary battery materials obtained in Examples 2 to 41 and Comparative Examples 1 to 4 as negative electrode active materials.

[Examples 42 and 45]

The surface of a black solid obtained as in Example 1 was subjected to carbon coating treatment through chemical vapor deposition by charging 20 g of the black solid in a CVD apparatus (Desk Top Rotary Kiln: manufactured

by Takasago Industry Co., Ltd.) and heating it at 850°C for 1 hour in Example 42 and for 3 hours in Example 45, while introducing a mixture gas of ethylene gas at 0.3 L/min and a nitrogen gas at 0.7 L/min. The amount of the carbon coating after the treatment was measured with a thermal analyzer, and it was found that the weight increased by 5% in Example 42 and by 20% in Example 45 from the weight before the treatment.

[Examples 43 and 44]

The curable resin composition (Synthesis Examples 1 to 3), the phenolic resin (Sumilite Resin PR-53416), and the Si slurry in Example 1 were changed as shown in Table 1, and carbon coating treatment of the black solid surface was performed as in Example 42. The amount of the carbon coating after the treatment was measured with a thermal analyzer, and it was found that the weight increased by 6% in Example 43 and by 7% in Example 44 from the weight before the treatment.

[Table 1]

| | Blending amount (g) | | | | Composition ratio (molar ratio) | | |
|---|---|---|---|---|---|---|---|
| | Curable resin composition | | Phenolic resin | Si slurry | Si | O | C |
| Example 1 | Synthesis Example 1 | 3.23 | 27.8 | 14.3 | 1 | 1.5 | 8.7 |
| Example 2 | Synthesis Example 1 | 1.94 | 29.0 | 15.0 | 1 | 0.5 | 8.9 |
| Example 3 | Synthesis Example 1 | 2.58 | 27.8 | 15.8 | 1 | 0.9 | 8.2 |
| Example 4 | Synthesis Example 1 | 2.58 | 26.6 | 17.9 | 1 | 1.1 | 5.6 |
| Example 5 | Synthesis Example 1 | 2.58 | 25.8 | 19.3 | 1 | 1.4 | 4.8 |
| Example 6 | Synthesis Example 1 | 1.62 | 25.8 | 21.5 | 1 | 0.4 | 5.4 |
| Example 7 | Synthesis Example 1 | 2.58 | 24.6 | 21.5 | 1 | 0.7 | 4.5 |
| Example 8 | Synthesis Example 1 | 13.24 | 13.5 | 17.9 | 1 | 1.7 | 2.9 |
| Example 9 | Synthesis Example 1 | 3.23 | 23.8 | 21.5 | 1 | 1.0 | 3.6 |
| Example 10 | Synthesis Example 1 | 1.62 | 23.8 | 25.1 | 1 | 0.4 | 3.9 |
| Example 11 | Synthesis Example 1 | 16.15 | 9.9 | 17.9 | 1 | 1.8 | 2.0 |
| Example 12 | Synthesis Example 1 | 8.08 | 17.9 | 21.5 | 1 | 1.2 | 2.7 |
| Example 13 | Synthesis Example 1 | 2.58 | 21.4 | 27.2 | 1 | 0.5 | 3.1 |
| Example 14 | Synthesis Example 1 | 12.92 | 8.7 | 27.2 | 1 | 1.1 | 2.0 |
| Example 15 | Synthesis Example 1 | 16.15 | 4.8 | 27.2 | 1 | 1.7 | 1.3 |
| Example 16 | Synthesis Example 2 | 16.15 | 2.0 | 32.2 | 1 | 1.8 | 0.5 |
| Example 17 | Synthesis Example 2 | 3:23 | 15.9 | 35.8 | 1 | 0.6 | 2.1 |
| Example 18 | Synthesis Example 2 | 12.92 | 5.2 | 33.7 | 1 | 1.4 | 0.8 |
| Example 19 | Synthesis Example 2 | 1.62 | 17.9 | 35.8 | 1 | 0.3 | 2.3 |
| Example 20 | Synthesis Example 2 | 6.46 | 11.9 | 35.8 | 1 | 0.9 | 1.3 |
| Example 21 | Synthesis Example 2 | 6.46 | 11.1 | 37.3 | 1 | 0.9 | 1.0 |
| Example 22 | Synthesis Example 2 | 8.08 | 9.9 | 35.8 | 1 | 0.6 | 1.3 |
| Example 23 | Synthesis Example 2 | 6.46 | 9.9 | 39.4 | 1 | 1.1 | 0.5 |
| Example 24 | Synthesis Example 2 | 9.69 | 7.9 | 35.8 | 1 | 0.6 | 1.3 |
| Example 25 | Synthesis Example 2 | 3.23 | 13.9 | 39.4 | 1 | 0.2 | 1.6 |
| Example 26 | Synthesis Example 2 | 3.23 | 13.9 | 39.4 | 1 | 0.2 | 1.6 |
| Example 27 | Synthesis Example 2 | 3.23 | 13.9 | 39.4 | 1 | 0.2 | 1.6 |

(continued)

| | Blending amount (g) | | | | Composition ratio (molar ratio) | | |
|---|---|---|---|---|---|---|---|
| | Curable resin composition | | Phenolic resin | Si slurry | Si | O | C |
| Example 28 | Synthesis Example 2 | 3.23 | 13.9 | 39.4 | 1 | 0.2 | 1.6 |
| Example 29 | Synthesis Example 1 | 4.85 | 10.7 | 41.6 | 1 | 0.4 | 1.1 |
| Example 30 | Synthesis Example 1 | 9.69 | 6.0 | 39.4 | 1 | 0.7 | 0.6 |
| Example 31 | Synthesis Example 1 | 3.23 | 11.9 | 43.0 | 1 | 0.2 | 1.2 |
| Example 32 | Synthesis Example 1 | 6.46 | 7.9 | 43.0 | 1 | 0.5 | 0.8 |
| Example 33 | Synthesis Example 1 | 3:23 | 9.9 | 46.6 | 1 | 0.3 | 0.9 |
| Example 34 | Synthesis Example 1 | 4.85 | 7.9 | 46.6 | 1 | 0.5 | 0.5 |
| Example 35 | Synthesis Example 1 | 4.85 | 6.0 | 50.2 | 1 | 0.4 | 0.5 |
| Example 36 | Synthesis Example 1 | 3.23 | 6.0 | 53.7 | 1 | 0.2 | 0.5 |
| Example 37 | Synthesis Example 1 | 4.52 | 28.2 | 10.7 | 1 | 1.2 | 10.8 |
| Example 38 | Synthesis Example 1 | 8.72 | 26.6 | 4.3 | 1 | 1.3 | 9.3 |
| Example 39 | Synthesis Example 1 | 8.40 | 10.3 | 34.4 | 1 | 0.7 | 1.5 |
| Example 40 | Synthesis Example 1 | 6.46 | 15.9 | 28.7 | 1 | 0.7 | 1.9 |
| Example 41 | Synthesis Example 1 | 5.17 | 17.1 | 29.4 | 1 | 0.6 | 1.9 |
| Example 42 | Synthesis Example 1 | 8:40 | 10.3 | 34.4 | 1 | 0.6 | 1.8 |
| Example 43 | Synthesis Example 1 | 6.46 | 15.9 | 28.7 | 1 | 0.6 | 2.3 |
| Example 44 | Synthesis Example 1 | 3.23 | 15.9 | 35.8 | 1 | 0.6 | 2.6 |
| Example 45 | Synthesis Example 1 | 8.40 | 10.3 | 34.4 | 1 | 0.6 | 1.8 |
| Comparative Example 1 | Synthesis Example 1 | 1.94 | 4.0 | 60.2 | 1 | 0.1 | 0.2 |
| Comparative Example 2 | Synthesis Example 1 | 22.40 | 8.5 | 11.5 | 1 | 4.1 | 2.9 |
| Comparative Example 3 | Synthesis Example 1 | 13.24 | 20.6 | 5.0 | 1 | 8.8 | 15.2 |
| Comparative Example 4 | Synthesis Example 1 | 9.69 | 5.9 | 39.4 | 1 | 0.7 | 0.6 |

Secondary batteries were produced and evaluated as in Example 1 by directly using the secondary battery materials obtained in Examples 2 to 45 and Comparative Examples 1 to 4 as negative electrode active materials.

The evaluation results are shown in Tables 2 and 3.

[Table 2]

| | Si particle diameter | Active material particle diameter | Specific surface area | 29Si-NMR | Carbon coat | Initial charge capacity | Initial discharge capacity | Initial discharge capacity | Initial efficiency | Initial efficiency | Capacity retention rate | Capacity retention rate |
|---|---|---|---|---|---|---|---|---|---|---|---|---|
| | nm | D50 (μm) | m2/g | Area ratio A/B | Weight rate % | mAh/g | mAh/g | | % | | %@100th | |
| Example 1 | 60 | 5.7 | 27.1 | 0.8 | 0 | 1030 | 816 | ○ | 79 | ○ | 97 | ◎ |
| Example 2 | 60 | 4.8 | 28.5 | 1 | 0 | 1017 | 815 | ○ | 80 | ◎ | 97 | ◎ |
| Example 3 | 60 | 7.4 | 27.0 | 0.9 | 0 | 1071 | 857 | ○ | 80 | ◎ | 97 | ◎ |
| Example 4 | 60 | | 26.4 | 5.1 | 0 | 1166 | 939 | ○ | 81 | ◎ | 97 | ◎ |
| Example 5 | 60 | | 26.2 | 1.1 | 0 | 1229 | 993 | ○ | 81 | ◎ | 96 | ◎ |
| Example 6 | 60 | 5.8 | 26.2 | 1.2 | 0 | 1290 | 1054 | ○ | 82 | ◎ | 96 | ◎ |
| Example 7 | 60 | | 26.0 | 1.4 | 0 | 1324 | 1075 | ○ | 81 | ◎ | 96 | ◎ |
| Example 8 | 60 | 5.2 | 9.1 | 1.3 | 0 | 1533 | 1170 | ○ | 76 | ○ | 97 | ◎ |
| Example 9 | 60 | | 26.1 | 0.5 | 0 | 1346 | 1089 | ○ | 81 | ◎ | 96 | ◎ |
| Example 10 | 60 | | 26.0 | 1.1 | 0 | 1448 | 1191 | ○ | 82 | ◎ | 96 | ◎ |
| Example 11 | 60 | 7.2 | 8.7 | 1.2 | 0 | 1634 | 1233 | ○ | 75 | ○ | 97 | ◎ |
| Example 12 | 60 | | 21.5 | 0.6 | 0 | 1513 | 1194 | ○ | 79 | ○ | 96 | ◎ |
| Example 13 | 60 | 6.3 | 25.6 | 0.9 | 0 | 1577 | 1294 | ○ | 82 | ◎ | 96 | ◎ |
| Example 14 | 60 | | 7.8 | 2.2 | 0 | 1933 | 1518 | ○ | 79 | ○ | 96 | ◎ |
| Example 15 | 60 | 7.6 | 5.6 | 1.2 | 0 | 2045 | 1588 | ○ | 78 | ○ | 96 | ◎ |
| Example 16 | 60 | 8.1 | 4.2 | 1.1 | 0 | 2266 | 1779 | ○ | 79 | ○ | 95 | ◎ |
| Example 17 | 60 | | 10.1 | 1.3 | 0 | 1820 | 1480 | ○ | 81 | ◎ | 90 | ◎ |
| Example 18 | 60 | | 4.7 | 2.5 | 0 | 2218 | 1763 | ○ | 80 | ◎ | 95 | ◎ |
| Example 19 | 60 | | 21.0 | 1.5 | 0 | 1923 | 1600 | ○ | 83 | ◎ | 94 | ○ |
| Example 20 | 60 | | 18.7 | 4.9 | 0 | 2090 | 1705 | ○ | 82 | ◎ | 94 | ○ |
| Example 21 | 60 | | 17.6 | 2.5 | 0 | 2153 | 1760 | ○ | 82 | ◎ | 94 | ○ |

(continued)

| | Si particle diameter | Active material particle diameter | Specific surface area | 29Si-NMR | Carbon coat | Initial charge capacity | Initial discharge capacity | Initial discharge capacity | Initial efficiency | Initial efficiency | Capacity retention rate | Capacity retention rate |
|---|---|---|---|---|---|---|---|---|---|---|---|---|
| | nm | D50 (μm) | m2/g | Area ratio A/B | Weight rate % | mAh/g | mAh/g | | % | | %@100th | |
| Example 22 | 60 | | 4.1 | 3 | 0 | 1950 | 1600 | ○ | 82 | ◎ | 92 | ○ |
| Example 23 | 60 | | 8.6 | 1.8 | 0 | 2248 | 1842 | ○ | 82 | ◎ | 93 | ○ |
| Example 24 | 60 | | 3.9 | 3.5 | 0 | 2020 | 1620 | ○ | 80 | ◎ | 93 | ○ |
| Example 25 | 60 | 0.7 | 19.8 | 1.2 | 0 | 2137 | 1680 | ○ | 79 | ○ | 95 | ◎ |

[Table 3]

| | Si particle diameter | Active material particle diameter | Specific surface area | $^{29}$Si-NMR | Carbon coat | Initial charge capacity | Initial discharge capacity | Initial discharge capacity | Initial efficiency | Initial efficiency | Capacity retention rate | Capacity retention rate |
|---|---|---|---|---|---|---|---|---|---|---|---|---|
| | nm | D50 (μm) | m2/g | Area ratio A/B | Weight rate % | mAh/g | mAh/g | | % | | %@100th | |
| Example 26 | 60 | 2.5 | 19.8 | 1.2 | 0 | 2137 | 1704 | ○ | 80 | ◎ | 93 | ○ |
| Example 27 | 60 | 7.2 | 19.8 | 1.2 | 0 | 2137 | 1772 | ○ | 83 | ◎ | 93 | ○ |
| Example 28 | 60 | 9.2 | 19.8 | 1.2 | 0 | 2137 | 1780 | ○ | 83 | ◎ | 92 | ○ |
| Example 29 | 60 | | 17.2 | 4.2 | 0 | 2287 | 1889 | ○ | 83 | ◎ | 92 | ○ |
| Example 30 | 82 | | 5.3 | 3.8 | 0 | 2359 | 1981 | ○ | 84 | ◎ | 89 | ○ |
| Example 31 | 98 | | 18.5 | 2.1 | 0 | 2295 | 1950 | ○ | 85 | ◎ | 82 | ○ |
| Example 32 | 60 | | 7.9 | 6.1 | 0 | 2406 | 1978 | ○ | 82 | ◎ | 90 | ○ |
| Example 33 | 60 | | 8.7 | 7 | 0 | 2453 | 2045 | ◎ | 83 | ◎ | 90 | ○ |
| Example 34 | 60 | | 7.8 | 6.5 | 0 | 2508 | 2080 | ◎ | 83 | ◎ | 90 | ○ |
| Example 35 | 60 | | 6.5 | 7.5 | 0 | 2667 | 2217 | ◎ | 83 | ◎ | 88 | ○ |
| Example 36 | 60 | | 6.3 | 8.6 | 0 | 2769 | 2318 | ◎ | 84 | ◎ | 87 | ○ |
| Example 37 | 60 | 6.5 | 31.2 | 1.3 | 0 | 916 | 708 | ○ | 77 | o | 96 | ◎ |
| Example 38 | 60 | 5.9 | 31.0 | 0.7 | 0 | 1007 | 757 | ○ | 75 | o | 96 | ◎ |
| Example 39 | 60 | 6.2 | 23.0 | 3.2 | 0 | 2093 | 1693 | ○ | 81 | ◎ | 94 | ○ |
| Example 40 | 60 | 5.9 | 25.0 | 3.2 | 0 | 1774 | 1432 | ○ | 81 | ◎ | 94 | ○ |
| Example 41 | 60 | 5.9 | 18.3 | 3.2 | 0 | 1761 | 1432 | ○ | 81 | ◎ | 94 | ○ |
| Example 42 | 60 | 6.5 | 3.5 | 3.2 | 5 | 2005 | 1645 | ○ | 82 | ◎ | 95 | ◎ |
| Example 43 | 60 | 6.1 | 3.8 | 3 | 6 | 1703 | 1401 | ○ | 82 | ◎ | 95 | ◎ |
| Example 44 | 60 | 6.1 | 4.1 | 3.1 | 7 | 1687 | 1402 | ○ | 83 | ◎ | 95 | ◎ |
| Example 45 | 60 | 6.5 | 3.5 | 3.2 | 20 | 1701 | 1420 | ○ | 83 | ◎ | 95 | ◎ |

(continued)

| | Si particle diameter | Active material particle diameter | Specific surface area | $^{29}$Si-NMR | Carbon coat | Initial charge capacity | Initial discharge capacity | Initial discharge capacity | Initial efficiency | Initial efficiency | Capacity retention rate | Capacity retention rate |
|---|---|---|---|---|---|---|---|---|---|---|---|---|
| | nm | D50 (μm) | m2/g | Area ratio A/B | Weight rate % | mAh/g | mAh/g | | % | | %@100th | |
| Comparative Example 1 | 60 | 6.2 | 121.1 | 11.8 | 0 | 3020 | 2536 | ◎ | 84 | ◎ | 40 | ▲ |
| Comparative Example 2 | 60 | 6.3 | 29.0 | 1.1 | 0 | 1594 | 1099 | ○ | 69 | ▲ | 90 | ◎ |
| Comparative Example 3 | 60 | 6.5 | 31.2 | 0.4 | 0 | 964 | 678 | ▲ | 70 | ▲ | 96 | ◎ |
| Comparative Example 4 | 150 | | 17 | 2.5 | 0 | 2295 | 1970 | ○ | 86 | ◎ | 62 | ▲ |

In Tables 2 and 3, each evaluation method is as follows:

Si particle diameter: volume average particle diameter (D50) measured using a laser diffraction particle size distribution analyzer (manufactured by Malvern Panalytical Ltd., Mastersizer 3000);
Specific surface area (BET): measured by a nitrogen adsorption method using a specific surface area measurement apparatus (manufactured by BELJAPAN Inc., BELSORP-mini);
$^{29}$Si-NMR: used manufactured by JEOL RESONANCE Co., Ltd., JNM-ECA 600; and
Battery characteristics evaluation: the evaluation test of charge and discharge characteristics was performed by measuring battery characteristics using a secondary battery charge and discharge tester (manufactured by Meiden Hokuto Corporation) at a room temperature of 25°C in a cut-off voltage range of 0.005 to 1.5 V by adjusting the charge and discharge rate to 0.1C (the 1st to 3rd times) and 0.2C (after the 4th cycle) under constant current-constant voltage charging/constant current discharging conditions. At each switching of charging and discharging, the circuit was left open for 30 minutes. The initial Coulombic efficiency and the cycle characteristics (in this application, referring to the capacity retention rate in 100 cycles) were determined as follows:

Initial (coulombic) efficiency (%) = initial discharge capacity (mAh/g)/initial charge capacity (mAh/g).

The initial discharge capacity was evaluated as follows:

◎: initial discharge capacity of 2000 mAh/g or more;
◦: initial discharge capacity of 1000 mAh/g or more and less than 2000 mAh/g; and
▲: initial discharge capacity of less than 1000 mAh/g.

The initial efficiency was evaluated as follows:

◎: initial efficiency of 80% or more;
◦: initial efficiency of 75% or more and less than 85%; and
▲: capacity retention rate of less than 75%.

Capacity retention rate (%@100th time) = 100th discharge capacity (mAh/g)/initial discharge capacity (mAh/g).

◎: capacity retention rate of 95% or more;
◦: capacity retention rate of 85% or more and less than 95%; and
▲: capacity retention rate of less than 85%.

FT-IR measurement: FT/IR-4200 (manufactured by JASCO Corporation) was used as the measuring apparatus. A measurement sample and KBr were mixed to prepare a tablet sample for measurement, and measurement was performed by a transmission method in a range of from 4000 to 400 $cm^{-1}$.
Raman scattering spectrometry: NRS-5500 (manufactured by JASCO Corporation) was used as the measuring apparatus. The measurement conditions were an excitation laser wavelength of 532 nm, an objective lens magnification of 100 times, and a measurement wavelength range of from 3500 to 100 $cm^{-1}$.

Example 46

In the 150-mL container of a small bead mill, zirconia beads having a particle diameter range of from 0.1 mm to 0.2 mm and 100 mL of methyl ethyl ketone (hereinafter, also referred to as "MEK") solvent were placed, and a silicon powder having an average particle diameter of 3 to 5 um (manufactured by FUJIFILM Wako Pure Chemical Corporation) and a cationic dispersant solution (BYK JAPAN KK: BYK145) were added thereto, followed by bead mill wet pulverization to obtain a silicon slurry in a dark brown liquid state.
A polysiloxane resin (hereinafter, also referred to as "PSi resin") having an average molecular weight of 3500 and a phenolic resin (hereinafter, also referred to as "Ph-R resin") having an average molecular weight of 3000 were mixed at a weight ratio of the resin solid content of 20 : 80, and the silicon slurry in a dark brown liquid state was added thereto at a silicon particle amount of 50 wt%, followed by sufficient mixing in a stirrer. The silicon in the silicon slurry had an average particle diameter of 60 nm. After the mixing, desolventization and reduced pressure drying were performed to obtain a precursor. Subsequently, the precursor was fired at a high temperature of 1050°C for 6 hours in a nitrogen

atmosphere, followed by pulverization with a planetary ball mill to obtain a black solid.

The black solid was pulverized with a planetary ball mill, and the obtained black powder was subjected to thermal chemical vapor deposition (hereinafter, chemical vapor deposition will also be referred to as "CVD") to obtain a negative electrode active material having a carbon coat on at least a part of the surface. On this occasion, the thermal CVD was performed using a rotary kiln reactor and using LPG (liquid propane gas) as the carbon source at a furnace temperature of 900°C, a pressure of 1 atm, and a CVD time of 260 minutes. In the obtained negative electrode active material, the amount of the carbon coat was 10.1% based on TG-DTA, the true density was 1.84 g/cm$^3$, and the porosity calculated from them was 16.9%. The mass ratio of silicon, silicon oxycarbide, and carbonaceous phase was 50/5/45.

Subsequently, a half-cell was produced using the negative electrode active material obtained above by the following method, and a secondary battery charge and discharge test was performed.

A slurry was prepared by mixing 80 parts by mass of the active material particle obtained above, 10 parts by mass of acetylene black as a conductive assistant, and 10 parts by mass of a mixture of CMC and SBR as a binder. The obtained slurry was formed into a film on copper foil. After reduced pressure drying at 110°C, a half-cell was produced using Li metal foil as a counter electrode. The charge and discharge characteristics of this half-cell were evaluated using a secondary battery charge and discharge tester (manufactured by Meiden Hokuto Corporation) at a cut-off voltage range of 0.005 to 1.5 V. As the result of the charge and discharge measurement, the initial Coulombic efficiency was 84.6%. The results are shown in Table 4.

Examples 47 and 48

Negative electrode active materials shown in Table 1 were obtained as in Example 46 except that the silicon slurry was not used and the carbon coat amount was changed as shown in Table 4.

The results of evaluation of charge and discharge characteristics performed as in Example 46 are shown in Table 4.

Examples 49 to 53

Negative electrode active materials shown in Table 4 were obtained as in Example 46 except that the carbon coat was changed as shown in Table 4.

The results of evaluation of charge and discharge characteristics performed as in Example 46 are shown in Table 4.

Examples 54 to 56

Negative electrode active materials shown in Table 4 were obtained as in Example 46 except that the mass ratio of silicon, silicon oxycarbide, and carbonaceous phase and the carbon coat were changed as shown in Table 4.

The results of evaluation of charge and discharge characteristics performed as in Example 46 are shown in Table 4.

Comparative Example 5

A negative electrode active material was obtained under the same conditions as in Example 46 except that the reaction time of thermal CVD was 20 minutes. The amount of the carbon coat of the obtained negative electrode active material was 0.8% based on TG-DTA, the true density was 2.09 g/cm3, and the porosity calculated from them was 2.5%. The initial Coulombic efficiency was 81.1% based on the charge and discharge measurement results of the half-cell. The results are shown in Table 4.

Comparative Example 6

A negative electrode active material was obtained under the same conditions as in Example except that thermal CVD was not performed. The amount of the carbon coat of the obtained negative electrode active material was 0%, the true density was 2.32 g/cm$^3$, and the porosity was 0%. The initial Coulombic efficiency was 80.8% based on the charge and discharge measurement results of the half-cell. The results are shown in Table 4.

[Table 4]

| | Si/SiOC/C | Carbon coat amount | True density ρ | True density ρ' | Porosity | Initial coulombic efficiency |
|---|---|---|---|---|---|---|
| | | (%) | (g/cm3) | (g/cm3) | (%) | (%) |
| Example 46 | 0/100/0 | 7.2 | 2.25 | 1.87 | 14.5 | 83.9 |
| Example 47 | 0/100/0 | 13.4 | 2.25 | 1.85 | 13.3 | 84.2 |
| Example 48 | 50/5/45 | 8.1 | 2.32 | 1.86 | 16.7 | 84.0 |
| Example 49 | 50/5/45 | 10.1 | 2.32 | 1.84 | 16.9 | 84.6 |
| Example 50 | 50/5/45 | 11.6 | 2.32 | 1.83 | 17.0 | 84.0 |
| Example 51 | 50/5/45 | 20.2 | 2.32 | 1.82 | 14.3 | 83.8 |
| Example 52 | 50/5/45 | 24.8 | 2.32 | 1.90 | 8.8 | 83.5 |
| Example 53 | 50/5/45 | 25.7 | 2.32 | 1.92 | 7.5 | 83.2 |
| Example 54 | 50/7.5/42.5 | 7.6 | 2.15 | 1.83 | 12.7 | 84.5 |
| Example 55 | 50/7.5/42.5 | 17.5 | 2.15 | 1.75 | 13.7 | 83.7 |
| Example 56 | 50/7.5/42.5 | 22.3 | 2.15 | 1.79 | 10.4 | 83.7 |
| Comparative Example 5 | 50/7.5/42.5 | 4.5 | 2.15 | 1.99 | 6.0 | 82.0 |
| Comparative Example 6 | 50/7.5/42.5 | 1.5 | 2.15 | 2.05 | 4.2 | 81.4 |
| Si/SiOC/C: **Silicon/silicon oxycarbide/carbonaceous phase** | | | | | | |

In Table 4, each evaluation method is as follows:

Measurement of carbon coat amount: calculated by measuring the weight loss using a thermal analyzer (manufactured by Rigaku Corporation, Thermo Plus EVO2) in the atmosphere;
True density: measured using a true density measurement apparatus (manufactured by Anton Paar GmbH, Ultrapyc 5000 micro) using helium gas at a temperature of 25°C with a measurement pressure of 115 kPa;
Porosity: calculated based on the expression (1) using ρ" of 1.6 (g/cm$^3$); and
Battery characteristics evaluation: battery characteristics were measured using a secondary battery charge and discharge tester (manufactured by Meiden Hokuto Corporation), and the initial Coulombic efficiency was determined at a room temperature of 25°C in a cut-off voltage range of 0.005 to 1.5 V as follows:

Initial Coulombic efficiency (%) of active material = initial discharge capacity (mAh/g)/initial charge capacity (mAh/g).

As obvious from the above results, when the present negative electrode active material 1 is used, a secondary battery with high initial Coulombic efficiency is obtained. A nonaqueous electrolyte secondary battery including the present negative electrode active material 1 is excellent in the battery characteristics.
As obvious from the above results, when the secondary battery material of the present invention is used as a negative electrode active material, the charge and discharge capacity, the initial efficiency, and the capacity retention rate are high as a whole, and the balance of these characteristics is excellent. A secondary battery including the negative electrode active material of the present invention is excellent in the battery characteristics.

Example 57

The negative electrode active material of the present invention was prepared as follows.
A silicon nanoparticle was obtained by a wet pulverizing method (bead mill).
A suspension of this silicon nanoparticle was uniformly mixed with a polysiloxane silicon organic compound and a commercially available phenolic resin (manufactured by Sumitomo Bakelite Co., Ltd., Sumilite Resin, PR-53416)

at a certain composition ratio (preparation composition calculated as the composition after firing: SiOC/C/Si = 0.05/0.45/0.5), and the mixture was then dried under reduced pressure to obtain a precursor. The precursor was fired at a high temperature of 1100°C for 6 hours in a nitrogen atmosphere to obtain a black solid including SiOC/C/Si.

The black powder was pulverized with a planetary ball mill, and the obtained black powder was subjected to thermal CVD (chemical vapor deposition) to obtain a negative electrode active material provided with a carbon coat. On this occasion, the thermal CVD was performed using a rotary kiln reactor and using LPG (liquid propane gas) as the carbon source at a furnace temperature of 900°C, a pressure of 1 atm, and a CVD time of 3 hours. The obtained negative electrode active material had an average particle diameter (D50) of 4.7 um and a specific surface area (BET) of 13.2 $m^2/g$. The conditions are shown in Table 5, and the evaluation results are shown in Table 6.

Comparative Example 7

A silicon nanoparticle was obtained by a wet pulverizing method (bead mill).

A suspension of this silicon nanoparticle was uniformly mixed with a polysiloxane silicon organic compound and a commercially available phenolic resin (manufactured by Sumitomo Bakelite Co., Ltd., Sumilite Resin, PR-53416) at a certain composition ratio (preparation composition calculated as the composition after firing: SiOC/C/Si = 0.075/0.425/0.5), and the mixture was then dried under reduced pressure to obtain a precursor. The precursor was fired at a high temperature of 1100°C for 6 hours in a nitrogen atmosphere to obtain a black solid including SiOC/C/Si.

The black powder pulverized with a planetary ball mill had an average particle diameter (D50) of 7 um and a specific surface area (BET) of 21.3 $m^2/g$. This was used as a negative electrode active material. The conditions are shown in Table 5, and the evaluation results are shown in Table 6.

Examples 57 to 64 and Comparative Examples 8 and 9

Examples 57 to 64 and Comparative Examples 8 and 9 were performed as in Example 57 except that the resin 1, the resin 2, and conditions in Example 57 were changed as shown in Table 5 below. The evaluation results are shown in Table 6.

[Table 5]

| | Example 57 | Example 58 | Example 59 | Example 60 | Example 61 | Example 62 | Example 63 | Example 64 | Comparative Example 7 | Comparative Example 8 | Comparative Example 9 |
|---|---|---|---|---|---|---|---|---|---|---|---|
| Si material 1) | m-Si | m-Si | m-Si | m-Si | m-Si | m-Si | m-Si | a-Si | m-Si | m-Si | SiO |
| Resin 1 2) | PF | PF | PF | PF | PF | PF | PF | PF | PF | Polyimide | - |
| Resin 2 3) | PSiOA | PSiOA | PSiOA | PSiOA | PSiOA | PSiOA | PSiOA | - | PSiOA | - | - |
| Firing temperature | 1050 | 1100 | 1050 | 1075 | 1050 | 1050 | 1050 | 1200 | 1100 | 1100 | 900 |
| CVD treatment | Done | Not done | Done | Done | Done | Done | Done | Done | Not done | Not done | Done |
| CVD gas | LPG | - | LPG | LPG | LPG | LPG | LPG | LPG | - | - | LPG |
| Carbon coat | 7 | - | 10 | 7.6 | 28.4 | 8.1 | 11.6 | 8 | - | - | 5 |

1) Silicon material: m-Si represents metal silicon, and a-Si represents amorphous silicon.
2) In the table, PF represents phenol formaldehyde resin.
3) In the table, PSiOA represents polysiloxane acrylic resin.

[Table 6]

| | Example 57 | Example 58 | Example 59 | Example 60 | Example 61 | Example 62 | Example 63 | Example 64 | Comparative Example 7 | Comparative Example 8 | Comparative Example 9 |
|---|---|---|---|---|---|---|---|---|---|---|---|
| Si wt% | 50 | 50 | 50 | 50 | 50 | 50 | 50 | 50 | 50 | 50 | 100 |
| SiOC wt% | 5 | 5 | 5 | 7.5 | 5 | 5 | 5 | 10 | 7.5 | 10 | - |
| C wt% | 45 | 45 | 45 | 42.5 | 45 | 45 | 45 | 40 | 42.5 | 40 | - |
| Coat carbon wt% | 7 | 0 | 10 | 7.6 | 28.4 | 8.1 | 11.6 | 8 | 0 | 0 | 5 |
| Peak position | 23.64 | 24.28 | 24.66 | 23.94 | 25.58 | 24.72 | 24.76 | 24.46 | 23.08 | 23.6 | - |
| d002 nm | 0.376 | 0.367 | 0.361 | 0.372 | 0.348 | 0.360 | 0.360 | 0.364 | 0.385 | 0.377 | - |
| Average particle diameter D50 μm | 4.7 | 7.4 | 4.9 | 9.2 | 6.4 | 5.5 | 4.7 | 8.9 | 7.5 | 5.7 | 6.3 |
| Specific surface area $m^2/g$ | 13.2 | 18 | 5 | 1.23 | 3.53 | 5.26 | 4.77 | 8 | 21.3 | 57.8 | 2.1 |
| Discharge capacity mAh/g | 1572 | 1575 | 1428 | 1448 | 1217 | 1460 | 1436 | 1300 | 1519 | 1420 | 1650 |
| Initial coulombic efficiency % | 83.6 | 83.7 | 84.5 | 84.5 | 83.4 | 84.0 | 84.0 | 84.0 | 82.6 | 78.9 | 76.0 |

In Table 6, each evaluation method is as follows:

Volume average particle diameter: same as above;
Specific surface area: same as above;
Discharge capacity: a half-cell with lithium metal foil as the counter electrode was produced by adding a conductive assistant and a binder to a negative electrode active material powder and forming a film on copper foil. This half-cell was attached to a secondary battery charge and discharge measurement apparatus, and the capacity was measured in a cut-off voltage range of from 0.005 V to 1.5 V; and
Initial Coulombic efficiency: same as above.

A negative electrode active material having an average plane spacing d002 of 0.34 to 0.38 nm and a specific surface area of 0.01 to 20 $m^2/g$ had improved battery performance with a Coulombic efficiency of 83%.

As obvious from the above results, the present negative electrode active material 2 using the present secondary battery material has high charge and discharge capacity, initial efficiency, and capacity retention rate as a whole and has an excellent balance of these characteristics. The secondary battery including the present negative electrode active material 2 is excellent in the battery characteristics.

## Claims

1. A secondary battery material comprising Si (silicon), O (oxygen), and C (carbon), wherein a content ratio x of O to Si satisfies $0.1 \leq x \leq 2$, and a content ratio y of C to Si satisfies $0.3 \leq y \leq 11$.

2. The secondary battery material according to Claim 1, wherein $0.1 \leq x \leq 1.5$ and $0.3 \leq y \leq 11$ are satisfied.

3. The secondary battery material according to Claim 1, wherein $0.1 \leq x \leq 1$ and $0.3 \leq y \leq 11$ are satisfied.

4. The secondary battery material according to Claim 1, wherein $0.1 \leq x \leq 0.7$ and $0.3 \leq y \leq 11$ are satisfied.

5. The secondary battery material according to Claim 1, wherein x + y is 1.2 or more.

6. The secondary battery material according to Claim 1, wherein x + y is 2.3 or more.

7. The secondary battery material according to Claim 1, wherein as a chemical shift value obtained from a $^{29}$Si-NMR spectrum, an integrated intensity A of a peak in a range of from -70 ppm to -90 ppm pertaining to Si (0 value) and an integrated intensity B of a peak in a range of from -90 ppm to -130 ppm pertaining to bond in $SiO_4$ satisfy a following expression:

$$\text{Expression: } 0.2 < A/B < 5.$$

8. The secondary battery material according to Claim 1, having a volume average particle diameter (D50) of from 0.5 um to 10 um.

9. The secondary battery material according to Claim 1, wherein a specific surface area (BET) is from 1 $m^2/g$ to 20 $m^2/g$.

10. The secondary battery material according to Claim 1, wherein in infrared analysis, no absorption spectrum derived from Si-H stretching vibration is present in from 2000 $cm^{-1}$ to 2200 $cm^{-1}$.

11. A negative electrode active material comprising the secondary battery material according to Claim 1, wherein a carbon coat is provided on at least a part of the surface, a true density is 1.6 $g/cm^3$ or more and 2.0 $g/cm^3$ or less, and a porosity defined by a following expression (1) is 7% or more and 20% or less:

$$V = \left(\frac{100}{\rho'} - \frac{A}{\rho''} - \frac{100-A}{\rho}\right) \div \frac{100}{\rho'} \qquad (1)$$

(in the expression (1), V represents porosity (%), ρ represents density (g/$cm^3$) of inside of the negative electrode active material, ρ' represents density (g/$cm^3$) of the entire negative electrode active material, ρ" represents density (g/$cm^3$) of the carbon coat, and A represents an amount (mass%) of the carbon coat).

**12.** The negative electrode active material according to Claim 11, wherein a matrix including a carbonaceous phase is present inside the material.

**13.** The negative electrode active material according to Claim 11, comprising a Si nanoparticle.

**14.** The negative electrode active material according to Claim 11, wherein the amount of the carbon coat is 6 mass% or more and 30 mass% or less.

**15.** The negative electrode active material according to Claim 12, wherein the matrix contains silicon oxycarbide and a fired product of a phenolic resin.

**16.** The negative electrode active material according to Claim 13, wherein the Si nanoparticle has a volume average particle diameter (D50) of 100 nm or less.

**17.** A negative electrode active material comprising a Si nanoparticle, a carbonaceous phase, and the secondary battery material according to Claim 1, wherein

the carbonaceous phase embeds the Si nanoparticle,
the carbonaceous phase has a carbon 002 plane spacing of from 0.34 nm to 0.38 nm determined by XRD measurement, and
the negative electrode active material has a specific surface area of from 0.01 $m^2$/g to 20 $m^2$/g.

**18.** The negative electrode active material according to Claim 17, having a true density of 1.8 to 2.5 g/$cm^3$.

**19.** The negative electrode active material according to Claim 17, wherein a mass reduction rate in from 100°C to 700°C is 10% to 70% by TG analysis in a dry air flow.

**20.** The negative electrode active material according to Claim 17, comprising N (nitrogen), wherein a content of N is 0.2 mass% or more and 2.5 mass% or less when the total mass of Si, O, C, and N is defined as 100 mass%.

**21.** The negative electrode active material according to Claim 17, wherein a proportion of the secondary battery material is from 0.1 wt% to 19 wt%.

**22.** The negative electrode active material according to Claim 17, wherein as a chemical shift value obtained from a $^{29}$Si-NMR spectrum, integrated intensity A of a peak in a range of from -70 ppm to -90 ppm pertaining to Si (0 value) and integrated intensity B of a peak in a range of from -90 ppm to -130 ppm pertaining to bond in $SiO_4$ satisfy a following expression (2):

$$0.2 < A/B < 5 \quad (2).$$

**23.** The negative electrode active material according to Claim 17, having an average particle diameter (D50) of from 0.5 um to 10 um.

**24.** The negative electrode active material according to Claim 17, having a specific surface area (BET) of from 1 $m^2$/g to 20 $m^2$/g.

**25.** The negative electrode active material according to Claim 17, wherein in infrared analysis, no absorption spectrum derived from Si-H stretching vibration is present in from 2000 $cm^{-1}$ to 2200 $cm^{-1}$.

**26.** A secondary battery comprising the negative electrode active material according to any one of Claims 11 to 25.

【Fig. 1】

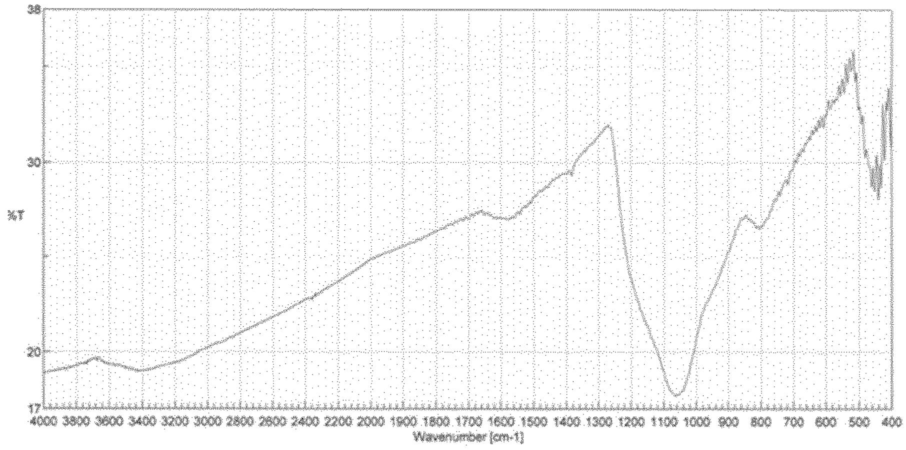


【Fig. 2】

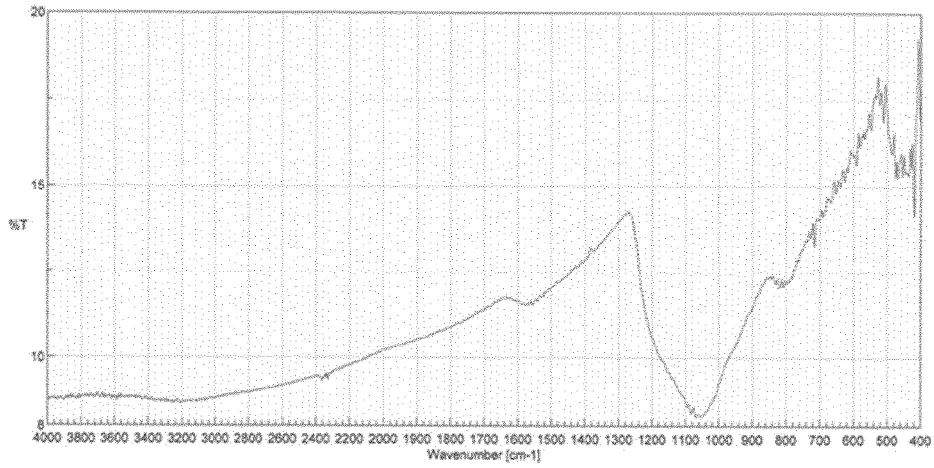


【Fig. 3】

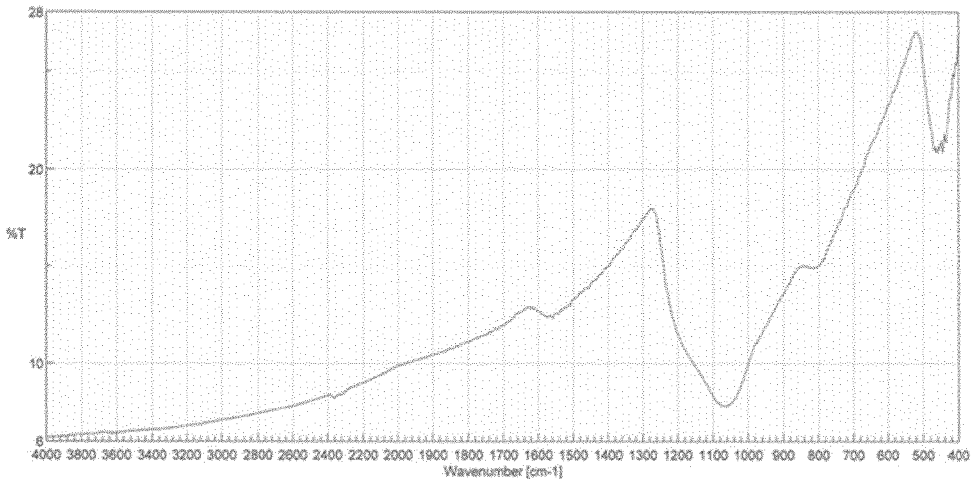

## INTERNATIONAL SEARCH REPORT

International application No. **PCT/JP2022/026169**

**A. CLASSIFICATION OF SUBJECT MATTER**

***H01M 4/38***(2006.01)i; ***H01M 4/36***(2006.01)i; ***H01M 4/58***(2010.01)i
FI: H01M4/38 Z; H01M4/58; H01M4/36 A

According to International Patent Classification (IPC) or to both national classification and IPC

**B. FIELDS SEARCHED**

Minimum documentation searched (classification system followed by classification symbols)

H01M4/38; H01M4/36; H01M4/58

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2020-1941 A (JNC CORP.) 09 January 2020 (2020-01-09) paragraphs [0015], [0016], [0027], [0031] | 1-6, 8<br>7, 9-26 |
| X<br>A | JP 2020-138895 A (JNC CORP.) 03 September 2020 (2020-09-03) paragraphs [0014], [0015], [0041], [0048], [0049], [0104]-[0106] | 1-4, 8<br>5-7, 9-26 |
| X<br>A | JP 2020-17504 A (ARAKAWA CHEM. IND., CO., LTD.) 30 January 2020 (2020-01-30) paragraphs [0113]-[0118], [0125], [0129] | 1-6, 8<br>7, 9-26 |
| X<br>A | JP 2021-114483 A (DIC CORP.) 05 August 2021 (2021-08-05) paragraphs [0010], [0011], [0022], [0024], [0088] | 1, 5, 8-9<br>2-4, 6-7, 10-26 |
| A | JP 2017-54720 A (TOYOTA MOTOR CORP.) 16 March 2017 (2017-03-16) paragraphs [0009], [0041], [0043] | 11-16 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 September 2022** | **20 September 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/026169**

| Patent document cited in search report | Publication date (day/month/year) | Patent family member(s) | Publication date (day/month/year) |
|---|---|---|---|
| JP 2020-1941 A | 09 January 2020 | US 2019/0393503 A1<br>paragraphs [0031]-[0039], [0072]-[0076], [0081]<br>CN 110635119 A | |
| JP 2020-138895 A | 03 September 2020 | US 2020/0280057 A1<br>paragraphs [0030]-[0038], [0175], [0186], [0187], [0275]-[0277]<br>CN 111640917 A | |
| JP 2020-17504 A | 30 January 2020 | CN 110783570 A<br>KR 10-2020-0013221 A | |
| JP 2021-114483 A | 05 August 2021 | US 2022/0069296 A1<br>paragraphs [0015]-[0019], [0046], [0048], [0049], [0107]<br>WO 2020/129467 A1<br>EP 3902036 A1<br>CN 113196527 A<br>KR 10-2021-0103480 A<br>TW 202105807 A | |
| JP 2017-54720 A | 16 March 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014002602 A
- JP 2018502029 W
- WO 2020179409 A
- JP 2018106830 A
- WO 2019107336 A
- JP 2016164870 A
- WO 2013031993 A
- JP 2019125435 A